# EUROPEAN PATENT APPLICATION

(11) **EP 4 800 815 A1**
(43) Date of publication of application: **02.09.2026**
(21) Application number: 24887364.8
(22) Date of filing: 30.05.2024
(51) Int. Cl.: H01M 50/15, H01M 50/60, H01M 50/258, H01M 50/249, H01M 50/46, H01M 50/463, H01M 50/673, H01M 50/682, H01M 10/058, H01M 10/0587, H01M 10/654

(54) **BATTERY CELL, BATTERY, AND ELECTRICAL APPARATUS**

(30) Priority: 09.11.2023 CN 202311493883
(71) Applicant: Contemporary Amperex Technology Co., Limited, Ningde, Fujian 352100 (CN)
(72) Inventor: BAI, Hualei, Ningde, Fujian 352100 (CN); ZHENG, Yulian, Ningde, Fujian 352100 (CN); WANG, Peng, Ningde, Fujian 352100 (CN); HUANG, Shoujun, Ningde, Fujian 352100 (CN); PENG, Xinying, Ningde, Fujian 352100 (CN)
(74) Representative: Ziebig Hengelhaupt Intellectual Property Attorneys Patentanwaltskanzlei PartGmbB
(86) International application number: PCT/CN2024/096339
(87) International publication number: WO 2025/097740

(57) **Abstract**

A battery cell (20), a battery (100), and an electrical apparatus, belonging to the technical field of batteries. The battery cell (20) comprises a housing (21), a first electrode assembly (22), a second electrode assembly (23), and an accommodating piece (24). The housing (21) is provided with a first wall (211). The first electrode assembly (22) and the second electrode assembly (23) are both accommodated within the housing (21) and are arranged along the thickness direction of the first wall (211), the second electrode assembly (23) is located between the first wall (211) and the first electrode assembly (22), and the first wall (211) is configured to support the second electrode assembly (23). The accommodating piece (24) is arranged within the housing (21), an accommodating cavity (241) is formed inside the accommodating piece (24), and the accommodating cavity (241) accommodates the first electrode assembly (22) and an electrolyte. The first electrode assembly (22) is a structure accommodated within the accommodating piece (24), and the accommodating piece (24) can also accommodate the electrolyte, so as to alleviate the phenomenon that the first electrode assembly (22) has a poor electrolyte infiltration effect due to the electrolyte within the housing (21) sinking along the thickness direction of the first wall (211), and thereby helping to improve the infiltration effect of the first electrode assembly (22), in order to improve the usage performance of the battery cell (20).

## Description

### CROSS-REFERENCE TO RELATED APPLICATION

The present application claims priority to Chinese Patent Application No. 202311493883X, filed on November 9, 2023 and entitled "BATTERY CELL, BATTERY, AND ELECTRIC DEVICE", the content of which is incorporated herein by reference in its entirety.

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, power batteries, as the power source of electric vehicles, play an irreplaceable and important role. With the vigorous promotion of new energy vehicles, the demand for power battery products is also increasingly growing, and the battery, as a core component of the new energy vehicle, has relatively high requirements for service performance. The battery cell of the battery typically includes a housing and an electrode assembly accommodated in the housing. In order to improve the energy density and capacity of the battery cell, a plurality of electrode assemblies are typically disposed in the housing of the battery cell. However, after the plurality of electrode assemblies are stacked in the battery cell, the wetting performance of some electrode assemblies by the electrolytic solution is likely to be poor, resulting in poor service performance of the battery cell.

### SUMMARY

Embodiments of the present application provide a battery cell, a battery, and an electric device, which can effectively improve the service performance of the battery cell.

In a first aspect, the embodiments of the present application provide a battery cell. The battery cell includes a housing, a first electrode assembly, a second electrode assembly, and an accommodating member; the housing is provided with a first wall; the first electrode assembly and the second electrode assembly are both accommodated in the housing and arranged in a thickness direction of the first wall, the second electrode assembly is located between the first wall and the first electrode assembly, and the first wall is configured to support the second electrode assembly; the accommodating member is disposed in the housing, an accommodating cavity is formed inside the accommodating member, and the accommodating cavity accommodates the first electrode assembly and an electrolytic solution.

In the above technical solution, the first electrode assembly and the second electrode assembly that are arranged in the thickness direction of the first wall are disposed in the housing, the second electrode assembly is located between the first wall and the first electrode assembly, and the first wall is configured to support the second electrode assembly, such that the first electrode assembly is a structure located on an upper side of the second electrode assembly. The accommodating member is disposed in the housing, and the accommodating cavity that is configured to accommodate the first electrode assembly and the electrolytic solution is formed inside the accommodating member, such that the first electrode assembly is a structure accommodated inside the accommodating member. In addition, the accommodating member can also accommodate the electrolytic solution. This can effectively alleviate the poor wetting performance of the first electrode assembly by the electrolytic solution caused by the electrolytic solution in the housing settling in the thickness direction of the first wall, such that the first electrode assembly located on the upper side of the second electrode assembly can be sufficiently wet by the electrolytic solution accommodated in the accommodating member, thereby helping to improve the wetting performance of the first electrode assembly, and thus improving the service performance of the battery cell.

In some embodiments, a first through hole is provided on an outer peripheral surface of the accommodating member, the first through hole is in communication with the accommodating cavity, and in the thickness direction of the first wall, the first through hole is located between end surfaces at two ends of the first electrode assembly.

In the above technical solution, the first through hole in communication with the accommodating cavity inside the accommodating member is provided on the outer peripheral surface of the accommodating member, and the first through hole is located between the end surfaces of the two ends of the first electrode assembly in the thickness direction of the first wall, such that a portion of the first electrode assembly is located on the lower side of the first through hole in the first direction. As a result, the electrolytic solution accommodated in the accommodating member can effectively wet the first electrode assembly, and excess electrolytic solution in the accommodating cavity of the accommodating member can overflow out of the accommodating cavity through the first through hole to wet the second electrode assembly located outside the accommodating member, thereby improving the utilization rate of the electrolytic solution while improving the wetting performance of the first electrode assembly by the electrolytic solution, and improving the wetting performance of the second electrode assembly.

In some embodiments, a plurality of first through holes are provided on the accommodating member, and the plurality of first through holes are spaced apart from each other in a circumferential direction of the first electrode assembly.

In the above technical solution, the plurality of first through holes are provided on the accommodating member, and the plurality of first through holes are structures spaced apart from each other in the circumferential direction of the first electrode assembly, thereby improving the efficiency of the electrolytic solution overflowing out of the accommodating cavity, such that excess electrolytic solution can quickly overflow out of the accommodating cavity and then contact the second electrode assembly to wet the second electrode assembly.

In some embodiments, the battery cell further includes a first insulating member; the first insulating member is disposed between the first electrode assembly and the accommodating member, and a projection of the first through hole in an axial direction thereof is located within the first insulating member.

In the above technical solution, the first insulating member is disposed between the first electrode assembly and the accommodating member, and the projection of the first through hole in the axial direction thereof is located within the first insulating member, such that the first insulating member can provide a certain shielding effect for a region of the first electrode assembly corresponding to the first through hole, thereby reducing the risk of short circuit between other components and the first electrode assembly after the other components pass through the first through hole, and thus helping to improve the use reliability of the battery cell.

In some embodiments, the first insulating member is disposed surrounding the first electrode assembly around an axis extending in the thickness direction of the first wall.

In the above technical solution, configuring the first insulating member as a structure surrounding the outer side of the first electrode assembly, in one aspect, can improve the structural stability of the first insulating member assembled between the first electrode assembly and the accommodating member, thereby helping to reduce the risk of detachment of the first insulating member during use, and in another aspect, can further improve the shielding effect of the first insulating member on the region of the first electrode assembly corresponding to the first through hole, thereby further reducing the risk of short circuit between other components and the first electrode assembly after the other components pass through the first through hole.

In some embodiments, the first insulating member is adhesively bonded to the first electrode assembly.

In the above technical solution, the first insulating member is configured as a structure adhesively bonded to the outer side of the first electrode assembly, such that the structural stability of the first insulating member disposed on the first electrode assembly can be further improved, and the difficulty of assembling the first insulating member between the first electrode assembly and the accommodating member can be reduced, thereby helping to improve the assembly efficiency of the battery cell.

In some embodiments, in the thickness direction of the first wall, the housing is provided with a second wall disposed opposite to the first wall, a liquid injection hole is provided on the second wall, and the liquid injection hole is in communication with the accommodating cavity.

In the above technical solution, the liquid injection hole is provided on the second wall of the housing, and the liquid injection hole is in communication with the accommodating cavity of the accommodating member, such that the electrolytic solution can be directly injected into the accommodating cavity of the accommodating member through the liquid injection hole, without the need to first introduce the electrolytic solution into the accommodating member and then assemble the accommodating member into the housing. This is conducive to optimizing the assembly process of the battery cell and can reduce the difficulty of introducing the electrolytic solution into the accommodating cavity of the accommodating member, thereby improving the production efficiency of the battery cell. In addition, in the embodiments where the first through hole is provided on the outer peripheral surface of the accommodating member, for the battery cell adopting such a structure, after the electrolytic solution can be directly injected into the accommodating cavity of the accommodating member through the liquid injection hole, the electrolytic solution can also overflow into the housing through the first through hole to wet the second electrode assembly, thereby eliminating the need to separately provide the liquid injection hole for the second electrode assembly, and thus achieving the effect of wetting the first electrode assembly and the second electrode assembly through one liquid injection. The operation is simple, which can effectively reduce the assembly difficulty of the battery cell and can optimize the takt time of the battery cell.

In some embodiments, in the thickness direction of the first wall, the housing is provided with a second wall disposed opposite to the first wall; the battery cell further includes a second insulating member, the second insulating member is disposed on a side, facing the first electrode assembly, of the second wall, and the second insulating member is configured to insulate and isolate the second wall from the first electrode assembly, where an end, facing the second wall, of the accommodating member in the thickness direction of the first wall is connected to the second insulating member.

In the above technical solution, the second insulating member is further disposed in the housing of the battery cell, and the second insulating member is disposed between the second wall and the first electrode assembly, such that the second insulating member can serve to insulate and isolate the first electrode assembly from the second wall, thereby reducing the risk of short circuit between the first electrode assembly and the second wall. In addition, connecting the end, close to the second wall, of the accommodating member in the thickness direction of the first wall to the second insulating member is conducive to further improving the structural stability of the accommodating member assembled in the housing, thereby reducing the wobbling of the accommodating member during use, and alleviating the overall gravity of the accommodating member and the first electrode assembly acting on the second electrode assembly.

In some embodiments, the accommodating member is in hot-melting connection to the second insulating member.

In the above technical solution, a hot-melting connection structure is provided between the accommodating member and the second insulating member to achieve the connection between the accommodating member and the second insulating member. This achieves a simple structure and relatively high connection stability, and helps to improve the sealing effect after the accommodating member and the second insulating member are connected to each other.

In some embodiments, a first opening is formed on the accommodating cavity at an end, close to the second wall, in the thickness direction of the first wall, and the second insulating member closes the first opening.

In the above technical solution, the first opening is formed at the end, close to the second wall, of the accommodating cavity of the accommodating member in the thickness direction of the first wall, and the first opening is closed by a third insulating member, thereby facilitating the injection of the electrolytic solution into the accommodating cavity through the first opening. In addition, the first opening of the accommodating member can be closed by the second insulating member, without the need to separately design a process for closing the first opening of the accommodating member, thereby helping to optimize the takt time of the battery cell.

In some embodiments, the accommodating member includes two films; the two films are arranged in a first direction, and the two films jointly define, in an enclosing manner, the accommodating cavity, where an end, close to the first wall, of each of the films in the thickness direction of the first wall forms a first connection region, and the first connection regions of the two films are stacked and connected to each other; two ends of each film in a second direction form two second connection regions, respectively, and the second connection regions of the two films are correspondingly stacked and connected to each other. Every two of the thickness direction of the first wall, the first direction, and the second direction are perpendicular to each other.

In the above technical solution, the accommodating member is provided with the two films that are arranged in the first direction. The first connection regions of the two films are stacked and connected to each other, and the second connection regions at the two ends of the two films in the second direction are stacked and connected to each other, such that the two films are connected to each other to jointly define, in an enclosing manner, the accommodating cavity configured to accommodate the first electrode assembly and the electrolytic solution. The structure is simple and easy to implement.

In some embodiments, the first connection regions of the two films are in hot-melting connection; and/or the second connection regions of the two films are in hot-melting connection.

In the above technical solution, the first connection regions of the two films are connected to each other by a hot-melting connection structure. This achieves a simple structure and relatively high stability, and helps to improve the sealing effect after the two first connection regions are connected to each other. Similarly, the second connection regions of the two films are connected to each other by a hot-melting connection structure. This achieves a simple structure and relatively high stability, and helps to improve the sealing effect after the two second connection regions are connected to each other.

In some embodiments, the first electrode assembly includes a first main body and a first tab connected to each other, the second electrode assembly includes a second main body and a second tab connected to each other, the second main body and the first main body are arranged in the thickness direction of the first wall, and the first tab is electrically connected to the second tab. The battery cell further includes a mounting frame. The mounting frame is accommodated in the housing and located on an outer side of the accommodating member; in the thickness direction of the first wall, the mounting frame is disposed between the first main body and the second main body, and the mounting frame is configured to separate the first main body from the second main body. A clearance groove is provided on a side, facing the first main body, of the mounting frame in the thickness direction of the first wall, and the clearance groove is configured to accommodate the first connection regions of the two films.

In the above technical solution, the mounting frame is disposed between the first main body and the second main body that are arranged in the thickness direction of the first wall, such that the mounting frame can separate the first main body from the second main body. In one aspect, the mounting frame can serve to stably assemble the first main body and the second main body, which is conducive to reducing the stability of the first electrode assembly and the second electrode assembly assembled into the housing. In another aspect, the collisions between the first main body and the second main body during use can be reduced. In addition, the clearance groove configured to accommodate the first connection regions of the two films is provided on the side, facing the first main body, of the mounting frame, such that the clearance groove of the mounting frame can provide clearance for the first connection regions of the two films, which is conducive to reducing interference between the mounting frame and the first connection regions of the films and can improve the internal space utilization rate of the battery cell.

In some embodiments, the accommodating member is made of an insulating material.

In the above technical solution, the accommodating member is configured to be made of an insulating material, such that the first electrode assembly accommodated in the accommodating cavity of the accommodating member can also be insulated and isolated from the housing or other components by means of the accommodating member, which is conducive to reducing the risk of short circuit between the first electrode assembly and the housing or other components.

In some embodiments, the first electrode assembly and the second electrode assembly are both wound structures formed by winding around the axis extending in the thickness direction of the first wall.

In the above technical solution, the first electrode assembly and the second electrode assembly are both configured as wound-type structures formed by winding around the axis extending in the thickness direction of the first wall, such that the first electrode assembly and the second electrode assembly are structures arranged in the housing in the axial directions of the first electrode assembly and the second electrode assembly. The battery cell adopting such a structure is capable of optimizing the dimension of a single electrode assembly accommodated in the housing in the thickness direction of the first wall while realizing the increase in the length dimension of the battery cell in the thickness direction of the first wall, without the need to enlarge the winding dimension of the first electrode assembly or the second electrode assembly in the thickness direction of the first wall, thereby effectively reducing the winding difficulty of the first electrode assembly and the second electrode assembly and reducing the assembly difficulty of the battery cell. This, in turn, is conducive to reducing the manufacturing cost of the battery cell and improving the production efficiency of the battery cell.

In some embodiments, a length direction of the housing is consistent with the thickness direction of the first wall, and a length of the housing is L, satisfying L ≥ 200 mm.

In the above technical solution, the length of the housing is configured to be greater than or equal to 200 mm to increase the length dimension of the battery cell in the thickness direction of the first wall, and the first electrode assembly and the second electrode assembly in the housing are configured as structures arranged in the thickness direction of the first wall while a relatively large length dimension of the battery cell is realized, such that the dimension of a single electrode assembly accommodated in the housing in the thickness direction of the first wall can be optimized while realizing that the length of the housing of the battery cell in the thickness direction of the first wall is greater than or equal to 200 mm, without the need to enlarge the winding dimension of the first electrode assembly or the second electrode assembly in the thickness direction of the first wall, thereby reducing the winding difficulty of the first electrode assembly and the second electrode assembly and reducing the assembly difficulty of the battery cell. This, in turn, is conducive to reducing the manufacturing cost of the battery cell and improving the production efficiency of the battery cell.

In some embodiments, the length direction of the housing is consistent with the thickness direction of the first wall, and the length of the housing is L, satisfying L ≥ 250mm.

In the above technical solution, the length of the housing is further configured to be greater than or equal to 250 mm to further increase the length dimension of the battery cell in the thickness direction of the first wall, such that the dimension of a single electrode assembly accommodated in the housing in the thickness direction of the first wall can be optimized while realizing that the length of the housing of the battery cell in the thickness direction of the first wall is greater than or equal to 250 mm, without the need to enlarge the winding dimension of the first electrode assembly or the second electrode assembly in the thickness direction of the first wall, thereby reducing the winding difficulty of the first electrode assembly and the second electrode assembly and reducing the assembly difficulty of the battery cell. This, in turn, is conducive to reducing the manufacturing cost of the battery cell and improving the production efficiency of the battery cell.

In some embodiments, the first electrode assembly is electrically connected to the second electrode assembly.

In the above technical solution, the first electrode assembly and the second electrode assembly are configured as structures that are electrically connected to each other, to achieve a structure in which the first electrode assembly and the second electrode assembly are connected in parallel or in series inside the housing, such that only two electrode output ends need to be provided on the housing to realize the input or output of the positive electrode and the negative electrode of the battery cell. As a result, this can reduce the production cost of the battery cell and can optimize the takt time of the battery cell, thereby improving the production efficiency of the battery cell.

In some embodiments, the first electrode assembly includes a first main body and a first tab, the second electrode assembly includes a second main body and a second tab, and the second main body and the first main body are arranged in the thickness direction of the first wall; in the thickness direction of the first wall, the first tab is disposed at an end, facing the second main body, of the first main body, the second tab is disposed at an end, facing the first main body, of the second main body, and the second tab is connected to the first tab to electrically connect the first electrode assembly and the second electrode assembly.

In the above technical solution, the first main body of the first electrode assembly and the second main body of the second electrode assembly are arranged in the first direction, the first tab of the first electrode assembly is disposed at the end, facing the second main body, of the first main body, and correspondingly, the second tab of the second electrode assembly is disposed at the end, facing the first main body, of the second main body, such that connecting the first tab and the second tab can achieve an electrical connection between the first electrode assembly and the second electrode assembly. The battery cell adopting such a structure facilitates the electrical connection between the first electrode assembly and the second electrode assembly, and is conducive to reducing the difficulty of the electrical connection between the first electrode assembly and the second electrode assembly, thereby improving the assembly efficiency of the battery cell.

In some embodiments, the battery cell further includes an adapter member; the adapter member connects the first tab and the second tab, the first tab is located within the accommodating cavity, the second tab is located outside the accommodating member, and a channel for the adapter member to pass through is provided at an end, close to the second main body, of the accommodating member in the thickness direction of the first wall.

In the above technical solution, the adapter member is further provided in the housing of the battery cell. The adapter member passes through the channel at the end, close to the second main body part, of the accommodating member in the thickness direction of the first wall, such that the adapter member can connect the first tab of the first electrode assembly located inside the accommodating member and the second tab of the second electrode assembly located outside the accommodating member to achieve the connection between the first tab and the second tab. The battery cell adopting such a structure does not need to configure the first tab of the first electrode assembly as a structure that passes through the accommodating member, and does not need to configure the second tab of the second electrode assembly as a structure that is inserted into the accommodating cavity of the accommodating member. Therefore, configuring the adapter member as a structure that connects the first tab and the second tab after passing through the accommodating member can reduce the difficulty of the connection between the first tab and the second tab, and the adapter member can more easily pass through the channel of the accommodating member than the first tab, thereby helping to reduce the assembly difficulty of the battery cell.

In some embodiments, the battery cell further includes a sealing member; the sealing member is disposed between the adapter member and the accommodating member, and the sealing member is configured to seal a gap between the adapter member and the accommodating member.

In the above technical solution, the sealing member is disposed between the adapter member and the accommodating member, such that the sealing member can seal the gap between the adapter member and the accommodating member, thereby improving the sealing performance between the adapter member and the accommodating member after the adapter member passes through the accommodating member, reducing the risk of leakage of the electrolytic solution from the channel of the accommodating member, and thus enabling the accommodating cavity of the accommodating member to have sufficient electrolytic solution to wet the first electrode assembly.

In some embodiments, the accommodating member includes two films; the two films are arranged in the first direction, and the two films jointly define, in an enclosing manner, the accommodating cavity; an end, close to the first wall, of each of the films in the thickness direction of the first wall forms a first connection region, the first connection regions of the two films are stacked and connected to each other, and the channel is formed between the first connection regions of the two films.

In the above technical solution, the accommodating member is provided with the two films arranged in the first direction, and the channel for the adapter member to pass through is formed by the first connection regions of the two films stacked together and jointly defining, in an enclosing manner, the channel, such that the adapter member is a structure clamped by the first connection regions of the two first films to allow the adapter member to pass through the first connection regions of the two films. Therefore, there is no need to separately form a channel on the accommodating member for the adapter member to pass through, which is conducive to reducing the manufacturing difficulty of the accommodating member. In addition, after the adapter member passes through the channel, the first connection regions of the two films and the adapter member can be conveniently stacked and then connected into a whole, which is conducive to improving the stability of the adapter member passing through the channel.

In some embodiments, the battery cell further includes a mounting frame; the mounting frame is accommodated in the housing and located on an outer side of the accommodating member; in the thickness direction of the first wall, the mounting frame is disposed between the first main body and the second main body, and the mounting frame is configured to separate the first main body from the second main body; the mounting frame is provided with a clearance hole, the clearance hole extends through the mounting frame in the thickness direction of the first wall, and the adapter member and the second tab are both inserted into the clearance hole.

In the above technical solution, the mounting frame is disposed between the first main body and the second main body that are arranged in the thickness direction of the first wall, such that the mounting frame can separate the first main body from the second main body. In one aspect, the mounting frame can serve to stably assemble the first main body and the second main body, which is conducive to reducing the stability of the first electrode assembly and the second electrode assembly assembled into the housing. In another aspect, the collisions between the first main body and the second main body during use can be reduced. In addition, the clearance hole that extends through the two sides of the mounting frame in the thickness direction of the first wall is provided on the mounting frame, and the adapter member and the second tab are both inserted into the clearance hole, such that the battery cell adopting such a structure, in one aspect, can reduce the connection difficulty of the adapter member and the second tab, which is conducive to reducing the blocking of the adapter member by the mounting frame, and in another aspect, can also provide a certain stabilizing and protecting role for the adapter member and the second tab by means of the mounting frame, which is conducive to reducing the wobbling of, or damage to the adapter member and the second tab during use, thereby improving the use stability and service life of the battery cell.

In some embodiments, the mounting frame includes a first frame body and a second frame body detachably connected to each other; the first frame body and the second frame body are arranged in a first direction, and the first frame body and the second frame body jointly define, in an enclosing manner, the clearance hole, the first direction being perpendicular to the thickness direction of the first wall.

In the above technical solution, the mounting frame is provided with the first frame body and the second frame body that are arranged in the first direction. The first frame body and the second frame body are configured as a detachably connected structure, and the first frame body and the second frame body jointly define, in an enclosing manner, the clearance hole configured to allow the adapter member and the second tab to be inserted thereinto, such that the mounting frame adopting such a structure, in one aspect, facilitates the assembly of the adapter member and the second tab into the clearance hole after the adapter member and the second tab are connected to each other, which is conducive to reducing the difficulty of assembling the adapter member and the second tab into the clearance hole, and in another aspect, facilitates the assembly of the mounting frame between the first main body and the second main body, and facilitates the maintenance of the adapter member and the second tab after quickly disassembling and assembling the first frame body and the second frame body at a later stage.

In some embodiments, a first groove is provided on a side, facing the second frame body, of the first frame body, and the first groove extends through the first frame body in the thickness direction of the first wall; a second groove is provided on a side, facing the first frame body, of the second frame body, and the second groove extends through the second frame body in the thickness direction of the first wall; the second groove and the first groove define, in an enclosing manner, the clearance hole.

In the above technical solution, the first groove is provided on the side, facing the second frame body, of the first frame body, and the second groove is provided on the side, facing the first frame body, of the second frame body, such that after the first frame body and the second frame body are assembled with each other in the first direction, the first groove and the second groove can jointly define, in an enclosing manner, the clearance hole configured to accommodate the adapter member and the second tab. The structure is simple and easy to implement.

In some embodiments, a snap-fit part is provided on a side, facing the second frame body, of the first frame body, and a snap-fit hole is provided on a side, facing the first frame body, of the second frame body; the snap-fit hole is configured to allow the snap-fit part to be snap-fitted thereinto.

In the above technical solution, the snap-fit part is provided on the side, facing the second frame body, of the first frame body, and correspondingly, the snap-fit hole configured to allow the snap-fit part to be snap-fitted thereinto is provided on the side, facing the first frame body, of the second frame body, such that the detachable connection between the first frame body and the second frame body is achieved through the snap fit between the snap-fit part and the snap-fit hole. The structure is simple and easy to assemble.

In some embodiments, the first tab includes a first root part and a first tab part; the first root part connects the first tab part and the first main body, and the first tab part is connected to the adapter member; in the thickness direction of the first wall, a first accommodating groove is provided on a side, facing the first main body, of the mounting frame, the first accommodating groove is configured to accommodate the first root part, and the clearance hole extends through a groove bottom surface of the first accommodating groove.

In the above technical solution, the first accommodating groove configured to accommodate the first root part of the first tab is provided on the side, facing the first main body, of the mounting frame, and the clearance hole is a structure that extends through the groove bottom surface of the first accommodating groove. Therefore, in one aspect, the mounting frame can provide clearance for the first root part of the first tab after the first root part of the first tab causes local protrusion of the accommodating member, thereby reducing the occurrence of the mounting frame pressing against and damaging the first tab, and in another aspect, this facilitates the insertion of the adapter member into the clearance hole to assemble and connect with the second tab after the adapter member and the first tab part are connected to each other and pass through the channel of the accommodating member.

In some embodiments, in the thickness direction of the first wall, the first root part is provided with a first surface facing away from the first main body, the first tab part protrudes from the first surface, and the first surface fits with the groove bottom surface of the first accommodating groove.

In the above technical solution, the first surface, facing the groove bottom surface of the first accommodating groove, of the first root part is configured as a structure that fits with the groove bottom surface of the first accommodating groove, enabling the groove bottom surface of the first accommodating groove to indirectly fit closely to the first surface of the first root part by means of the accommodating member, such that the groove bottom surface of the first accommodating groove can also play a certain shaping and gathering role for the first root part of the first tab, thereby helping to maintain the shape of the first root part of the first tab.

In some embodiments, the second tab includes a second root part and a second tab part; the second root part connects the second tab part and the second main body, the second tab part is inserted into the clearance hole, and the second tab part is connected to the adapter member; in the thickness direction of the first wall, a second accommodating groove is provided on a side, facing the second main body, of the mounting frame, the second accommodating groove is configured to accommodate the second root part, and the clearance hole extends through a groove bottom surface of the second accommodating groove.

In the above technical solution, the second accommodating groove configured to accommodate the second root part of the second tab is provided on the side, facing the second main body, of the mounting frame, and the clearance hole is a structure that extends through the groove bottom surface of the second accommodating groove, such that in one aspect, the mounting frame can provide clearance for the second root part of the second tab to reduce the occurrence of the mounting frame pressing against and damaging the second tab, and in another aspect, the insertion of the second tab part of the second tab into the clearance hole to assemble and connect with the adapter member is facilitated.

In some embodiments, in the thickness direction of the first wall, the second root part is provided with a second surface facing away from the second main body, the second tab part protrudes from the second surface, and the second surface fits with the groove bottom surface of the second accommodating groove.

In the above technical solution, the second surface, facing the groove bottom surface of the second accommodating groove, of the second root part is configured as a structure that fits with the groove bottom surface of the second accommodating groove, enabling the groove bottom surface of the second accommodating groove to fit closely to the second surface of the second root part, such that the groove bottom surface of the second accommodating groove can also play a certain shaping and gathering role for the second root part of the second tab, thereby helping to maintain the shape of the second root part of the second tab.

In some embodiments, the mounting frame is provided with a second through hole, the second through hole extends through the mounting frame in the thickness direction of the first wall, and the second through hole is configured to allow an electrolytic solution to pass through.

In the above technical solution, the mounting frame is provided with the second through hole that extends through the two sides of the mounting frame in the thickness direction of the first wall, such that the electrolytic solution is allowed to flow between the first electrode assembly and the second electrode assembly through the second through hole. This, in one aspect, is conducive to improving the fluidity of the electrolytic solution between the first electrode assembly and the second electrode assembly to improve the wetting performance of the first electrode assembly and the second electrode assembly, and in another aspect, facilitates the flow of a gas, generated between the first electrode assembly and the second electrode assembly, from the second through hole.

In some embodiments, the mounting frame is provided with a plurality of second through holes.

In the above technical solution, providing the plurality of second through holes on the mounting frame is conducive to further improving the fluidity of the electrolytic solution between the first electrode assembly and the second electrode assembly to further improve the wetting performance of the first electrode assembly and the second electrode assembly, and can further improve the flow effect of the gas generated between the first electrode assembly and the second electrode assembly.

In some embodiments, a cavity is formed inside the mounting frame, and the cavity is in communication with the second through hole.

In the above technical solution, the cavity is provided inside the mounting frame, and the cavity is in communication with the second through hole; that is, the second through hole is a structure that extends through the inner wall surface of the cavity, such that the mounting frame adopting such a structure, in one aspect, can reduce the weight of the mounting frame by providing the cavity to reduce the overall weight of the battery cell, thereby helping to improve the energy density of the battery cell, and in another aspect, enables the cavity to also play a certain buffering role for the electrolytic solution, thereby helping to further improve the wetting performance of the first electrode assembly and the second electrode assembly.

In some embodiments, the battery cell further includes a connecting member; the connecting member connects the mounting frame, the accommodating member, and the second main body.

In the above technical solution, the battery cell is further provided with the connecting member connecting the mounting frame, the accommodating member, and the second main body, such that the mounting frame, the second main body, and the accommodating member wrapping around an outer side of the first electrode assembly can be connected into a whole via the connecting member. This is conducive to improving the structural stability of the mounting frame disposed between the first main body and the second main body, thereby reducing the risks such as wobbling or detachment of the mounting frame between the first main body and the second main body.

In some embodiments, the connecting member is adhesively bonded to the mounting frame, the accommodating member, and the second main body.

In the above technical solution, the connecting member is configured as a structure adhesively bonded to the mounting frame, the accommodating member, and the second main body to connect the mounting frame, the accommodating member, and the second main body into a whole, such that the battery cell adopting such a structure is conducive to reducing the assembly difficulty of the connecting member connecting the mounting frame, the accommodating member, and the second main body, thereby improving the assembly efficiency of the battery cell.

In some embodiments, the connecting member surrounds outer sides of the mounting frame, the accommodating member, and the second main body around the axis extending in the thickness direction of the first wall.

In the above technical solution, the connecting member is configured as an annular structure surrounding the mounting frame, the accommodating member, and the second main body, such that the connecting member wraps around the outer sides of the mounting frame, the accommodating member, and the second main body. This is conducive to further improving the structural stability of the connecting member connecting the mounting frame, the accommodating member, and the second main body, thereby further improving the structural stability of the mounting frame disposed between the first main body and the second main body, so as to reduce the risks such as wobbling or detachment of the mounting frame between the first main body and the second main body.

In some embodiments, a first through hole is provided on an outer peripheral surface of the accommodating member, and the first through hole is in communication with the accommodating cavity; a projection of the first through hole in an axial direction thereof does not overlap with the connecting member.

In the above technical solution, the outer peripheral surface of the accommodating member is provided with the first through hole, in communication with the inside of the accommodating member, of the accommodating cavity, such that excess electrolytic solution in the accommodating member can overflow out of the accommodating cavity through the first through hole to wet the second electrode assembly located outside the accommodating member. The projection of the first through hole in the axial direction thereof is configured to not overlap with the connecting member, such that the connecting member is a structure that does not cover the first through hole, thereby reducing the blocking of the electrolytic solution by the connecting member, so as to allow the electrolytic solution located in the accommodating cavity to smoothly overflow out of the accommodating cavity through the first through hole.

In some embodiments, the first electrode assembly includes two first tabs, and the two first tabs have opposite polarities and are both disposed at the end, facing the second main body, of the first main body; the second electrode assembly includes two second tabs, and the two second tabs have opposite polarities and are both disposed at the end, facing the first main body, of the second main body; the first tab and the second tab having a same polarity are connected.

In the above technical solution, the two first tabs of the first electrode assembly having opposite polarities are both disposed at the end, facing the second main body, of the first main body, and the two second tabs of the second electrode assembly having opposite polarities are both disposed at the end, facing the first main body, of the second main body. The first tab and the corresponding second tab having the same polarity are connected to each other to achieve a parallel connection between the first electrode assembly and the second electrode assembly, thereby achieving an electrical connection between the first electrode assembly and the second electrode assembly. The structure is simple and easy to assemble.

In some embodiments, in the thickness direction of the first wall, the housing is provided with a second wall disposed opposite to the first wall; the battery cell further includes two electrode terminals, the two electrode terminals are both mounted to the second wall in an insulated manner, and the electrode terminals are configured to output or input electrical energy of the battery cell; the first electrode assembly further includes two third tabs, the two third tabs have opposite polarities and are both disposed at an end, facing the second wall, of the first main body in the thickness direction of the first wall, and the two third tabs are connected to the two electrode terminals, respectively.

In the above technical solution, the two third tabs are provided on the end, facing the second wall, of the first main body of the first electrode assembly, and the two third tabs are correspondingly connected to the two electrode terminals disposed on the second wall to realize the input or output of the electrical energy of the battery cell, such that the battery cell adopting such a structure only needs to connect the third tabs to the electrode terminals to realize the input or output of the electrical energy of the battery cell after the first electrode assembly and the second electrode assembly are electrically connected to each other, without the need to provide a plurality of electrode output ends, thereby realizing the increase in the length dimension of the battery cell in the thickness direction of the first wall while only requiring two electrode terminals to realize the input or output of the electrical energy of the battery cell. Therefore, this can effectively reduce the assembly difficulty of the battery cell, help to reduce the manufacturing cost of the battery cell, and help to improve the production efficiency of the battery cell.

In some embodiments, the battery cell further includes a third insulating member; the third insulating member wraps around outer sides of the accommodating member and the second electrode assembly around the axis extending in the thickness direction of the first wall, and the insulating member is configured to insulate and isolate the second electrode assembly from the housing.

In the above technical solution, the battery cell is further provided with the third insulating member, and the third insulating member wraps around the outer sides of the accommodating member and the second electrode assembly. In one aspect, enabling the third insulating member to separate the first electrode assembly from the housing as well as the second electrode assembly from the housing is conducive to reducing the risk of short circuit between the first electrode assembly and the housing as well as between the second electrode assembly and the housing, thereby improving the use reliability of the battery cell. In another aspect, the third insulating member can further provide a fastening effect for the second electrode assembly and the accommodating member wrapping around the outer side of the first electrode assembly, such that the first electrode assembly and the second electrode assembly arranged in the thickness direction of the first wall can be connected into a whole, thereby helping to improve the overall structural stability of the first electrode assembly and the second electrode assembly.

In some embodiments, the housing includes a housing body and an end cover; the housing body includes a side wall and the first wall that are integrally formed, where the side wall is disposed around the first wall, and in the thickness direction of the first wall, one end of the side wall is connected to the first wall, and the other end of the side wall defines, in an enclosing manner, a second opening; the side wall and the first wall jointly define an accommodating space configured to accommodate the first electrode assembly and the second electrode assembly; the end cover closes the second opening.

In the above technical solution, the first wall of the housing is configured as a wall, disposed opposite to the end cover in the first direction, of the housing body, such that the first electrode assembly and the second electrode assembly accommodated in the housing are structures supported by the bottom wall of the housing body. Adopting such a structure can enable the opening of the housing body to be located on an upper side of the housing, thereby helping to reduce the risk of liquid leakage of the battery cell during use caused by a connection failure between the end cover and the housing body.

In some embodiments, the housing includes a housing body and an end cover; an accommodating space provided with a second opening is formed inside the housing body, and the accommodating space is configured to accommodate the first electrode assembly and the second electrode assembly; the end cover closes the second opening; the end cover is the first wall.

In the above technical solution, the first wall of the housing is configured as the end cover of the housing for closing the opening of the housing body, such that the battery cell adopting such a structure facilitates the assembly of the first electrode assembly and the second electrode assembly into the housing body, and facilitates the support of the second electrode assembly by the end cover, thereby helping to reduce the assembly difficulty of the battery cell, and thus improving the production efficiency of the battery cell.

In a second aspect, the embodiments of the present application further provide a battery. The battery includes the above battery cell.

In a third aspect, the embodiments of the present application further provide an electric device. The electric device includes the above battery cell, and the battery cell is configured to provide electrical energy.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of a structure of a battery according to some embodiments of the present application;
FIG. 3 is a schematic structural diagram of a battery cell according to some embodiments of the present application;
FIG. 4 is an exploded view of a structure of a battery cell according to some embodiments of the present application;
FIG. 5 is a schematic structural diagram of a first electrode assembly of a battery cell according to some embodiments of the present application;
FIG. 6 is a schematic structural diagram of a second electrode assembly of a battery cell according to some embodiments of the present application;
FIG. 7 is a schematic structural diagram of an accommodating member of a battery cell according to some embodiments of the present application;
FIG. 8 is an exploded view of a structure of an accommodating member of a battery cell according to some embodiments of the present application;
FIG. 9 is a schematic diagram of an assembly of a first electrode assembly and a first insulating member of a battery cell according to some embodiments of the present application;
FIG. 10 is a schematic diagram of an assembly of an accommodating member and a second insulating member of a battery cell according to some embodiments of the present application;
FIG. 11 is a schematic structural diagram of a mounting frame of a battery cell according to some embodiments of the present application;
FIG. 12 is a front view of a mounting frame of a battery cell in a second direction according to some embodiments of the present application;
FIG. 13 is a schematic diagram of a connection between a first electrode assembly and a second electrode assembly of a battery cell according to some embodiments of the present application;
FIG. 14 is a schematic diagram of a connection between an adapter member and a sealing member of a battery cell according to some embodiments of the present application;
FIG. 15 is a bottom view of a mounting frame of a battery cell according to some embodiments of the present application;
FIG. 16 is a cross-sectional view of a mounting frame of a battery cell according to some embodiments of the present application;
FIG. 17 is an exploded view of a structure of a mounting frame of a battery cell according to some embodiments of the present application;
FIG. 18 is a cross-sectional view of a first electrode assembly of a battery cell according to some embodiments of the present application;
FIG. 19 is a cross-sectional view of a second electrode assembly of a battery cell according to some embodiments of the present application.;
FIG. 20 is a schematic diagram of an assembly of a first electrode assembly and a second electrode assembly with a connecting member according to some embodiments of the present application; and
FIG. 21 is a schematic diagram of an assembly of a first electrode assembly and a second electrode assembly with a third insulating member according to some embodiments of the present application.

Reference numerals: 1000-vehicle; 100-battery; 10-case; 11-first case body; 12-second case body; 20-battery cell; 21-housing; 211-first wall; 212-housing body; 2121-second opening; 213-end cover; 214-second wall; 2141-liquid injection hole; 22-first electrode assembly; 221-first main body; 222-first tab; 2221-first root part; 2221a-first surface; 2222-first tab part; 223-third tab; 23-second electrode assembly; 231-second main body; 232-second tab; 2321-second root part; 2321a-second surface; 2322-second tab part; 24-accommodating member; 241-accommodating cavity; 242-first through hole; 243-first opening; 244-film; 2441-first connection region; 2442-second connection region; 25-electrode terminal; 26-pressure relief mechanism; 27-first insulating member; 28-second insulating member; 29-mounting frame; 291-clearance groove; 292-clearance hole; 293-first frame body; 2931-first groove; 2932-snap-fit part; 294-second frame body; 2941-second groove; 2942-snap-fit hole; 295-first accommodating groove; 296-second accommodating groove; 297-second through hole; 298-cavity; 30-adapter member; 31-sealing member; 32-connecting member; 33-third insulating member; 200-controller; 300-motor; X-thickness direction of first wall; Y-first direction; Z-second direction.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to two or more (including two).

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum treated with silver on the surface, stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), or LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof.

In some embodiments, a foam metal may be used as the positive electrode. The foam metal may be foam nickel, foam copper, foam aluminum, a foam alloy, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be filled into and/or deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, nickel, titanium, or the like may be used. The foam metal may be foam nickel, foam copper, foam aluminum, a foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector is provided with two surfaces opposite to each other in its own thickness direction, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in a combination of two or more.

In some embodiments, the material of the positive electrode current collector may be aluminum, and the material of the negative electrode current collector may be copper.

In some embodiments, the electrode assembly further includes a separator. The separator is disposed between the positive electrode and the negative electrode.

In some embodiments, the separator is a separation film. The separation film may be of various types, and any porous-structure separation film known to have good chemical stability and mechanical stability may be selected and used.

As an example, the material of the separation film may include at least one of glass fiber, non-woven fabric, polyethylene, polypropylene, and polyvinylidene fluoride. The separation film may be a single-layer film or a multi-layer composite film. When the separation film is a multi-layer composite film, the materials of the layers may be the same or different. The separator may be a separate component located between the positive electrode and the negative electrode, or may be attached to surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell further includes an electrolytic solution that serves to conduct ions between the positive electrode and the negative electrode. The electrolytic solution includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be cylindrical, flat, polygonal prismatic, or the like.

In some embodiments, the electrode assembly is provided with tabs that can conduct current out from the electrode assembly. The tabs include a positive electrode tab and a negative electrode tab.

In some embodiments, the battery cell may include a housing. The housing is configured to enclose components such as the electrode assembly. The housing may be a steel housing, an aluminum housing, a plastic housing (such as polypropylene), a composite metal housing (such as a copper-aluminum composite housing), an aluminum-plastic film, or the like.

As an example, the battery cell may be a cylindrical battery cell, a prismatic battery cell, a pouch battery cell, or a battery cell of other shapes. The prismatic battery cell includes, but is not limited to, a square-housing battery cell, a blade-shaped battery cell, and a polygonal prismatic battery, and the polygonal prismatic battery is, for example, a hexagonal prismatic battery.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a portion of the chassis structure of the vehicle. For example, a portion of the case may become at least a portion of the floor of the vehicle, or a portion of the case may become at least a portion of a crossbeam and a longitudinal beam of the vehicle.

In some embodiments, the battery may be an energy storage device. The energy storage device includes an energy storage container, an energy storage electrical cabinet, and the like.

Batteries, with outstanding advantages such as high energy density, low environmental pollution, high power density, long service life, wide adaptability, and low self-discharge coefficient, are an important part of new energy development nowadays. Battery technology advancement requires consideration of various design factors at the same time, such as energy density, cycle life, discharge capacity, charging and discharging rate, and other performance parameters.

For a general battery cell, the battery cell typically includes a housing and an electrode assembly accommodated in the housing. As requirements for energy density and capacity of the battery cell become increasingly high, in the related art, in order to improve the energy density and capacity of the battery cell, a plurality of electrode assemblies are typically stacked in the housing of the battery cell in a height direction of the battery cell to improve the energy density and capacity of the battery cell. However, the settling of the electrolytic solution accommodated in the housing may cause the electrode assembly located on the upper side of the plurality of stacked electrode assemblies to fail to effectively contact the electrolytic solution, thereby resulting in poor wetting performance of some electrode assemblies of the plurality of electrode assemblies by the electrolytic solution, and thus resulting in poor service performance of the battery cell.

Based on the above considerations, in order to solve the problem of poor service performance of the battery cell, the embodiments of the present application provide a battery cell. The battery cell includes a housing, a first electrode assembly, a second electrode assembly, and an accommodating member. The housing is provided with a first wall. The first electrode assembly and the second electrode assembly are both accommodated in the housing and arranged in a thickness direction of the first wall, the second electrode assembly is located between the first wall and the first electrode assembly, and the first wall is configured to support the second electrode assembly. The accommodating member is disposed in the housing, an accommodating cavity is formed inside the accommodating member, and the accommodating cavity accommodates the first electrode assembly and an electrolytic solution.

In the battery cell with such a structure, the first electrode assembly and the second electrode assembly that are arranged in the thickness direction of the first wall are disposed in the housing, the second electrode assembly is located between the first wall and the first electrode assembly, and the first wall is configured to support the second electrode assembly, such that the first electrode assembly is a structure located on an upper side of the second electrode assembly. The accommodating member is disposed in the housing, and the accommodating cavity that is configured to accommodate the first electrode assembly and the electrolytic solution is formed inside the accommodating member, such that the first electrode assembly is a structure accommodated inside the accommodating member. In addition, the accommodating member can also accommodate the electrolytic solution. This can effectively alleviate the poor wetting performance of the first electrode assembly by the electrolytic solution caused by the electrolytic solution in the housing settling in the thickness direction of the first wall, such that the first electrode assembly located on the upper side of the second electrode assembly can be sufficiently wet by the electrolytic solution accommodated in the accommodating member, thereby helping to improve the wetting performance of the first electrode assembly, and thus improving the service performance of the battery cell.

The battery cell disclosed in the embodiments of the present application can be used in, but is not limited to be used in, electric devices such as vehicles, ships, or aircraft. The battery cell, the battery, or the like disclosed in the present application may be assembled into a power system of the electric device. This is conducive to alleviating the problem of poor wetting performance of the electrode assembly in the battery cell by the electrolytic solution, thereby improving the service performance of the battery cell.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of description, the following embodiments are illustrated by taking a vehicle as an example of the electric device according to an embodiment of the present application.

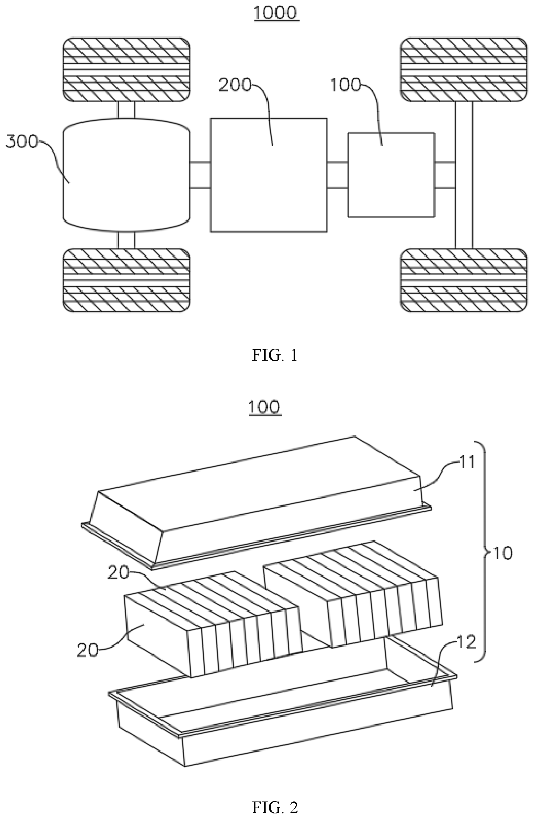

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000. The battery 100 may be disposed at the bottom of the vehicle 1000, or may be disposed at the head of the vehicle 1000, or may be disposed at the tail of the vehicle 1000. The battery 100 may be configured to supply power to the vehicle 1000. For example, the battery 100 may serve as an operation power source or service power source for the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as an operation power source or service power source for the vehicle 1000, but also as a driving power source for the vehicle 1000 to, replacing or partially replacing fuel or natural gas, provide driving power for the vehicle 1000.

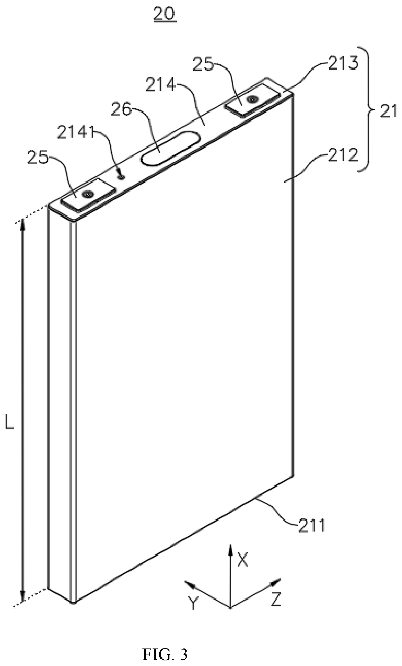

Referring to FIGs. 2 and 3, FIG. 2 is an exploded view of a structure of a battery 100 according to some embodiments of the present application, and FIG. 3 is a schematic structural diagram of a battery cell 20 according to some embodiments of the present application. The battery 100 includes a case 10 and a battery cell 20. The battery cell 20 is configured to be accommodated in the case 10.

The case 10 is configured to provide an assembly space for the battery cell 20, and the case 10 may be of various structures. In some embodiments, the case 10 may include a first case body 11 and a second case body 12. The first case body 11 and the second case body 12 cover each other. The first case body 11 and the second case body 12 jointly define an assembly space for accommodating the battery cell 20. The second case body 12 may be of a hollow structure with one end open, and the first case body 11 may be of a plate-shaped structure. The first case body 11 covers the open side of the second case body 12, such that the first case body 11 and the second case body 12 jointly define the assembly space; the first case body 11 and the second case body 12 may also both be of a hollow structure with one side open, and the open side of the first case body 11 covers the open side of the second case body 12.

Certainly, the case 10 formed by the first case body 11 and the second case body 12 may be in various shapes, such as a cylinder, a rectangular parallelepiped, or a cube. Illustratively, in FIG. 2, the case 10 is in the shape of a rectangular parallelepiped.

In the battery 100, one or a plurality of battery cells 20 disposed in the case 10 may be provided. If a plurality of battery cells 20 disposed in the case 10 are provided, the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may also be that in the battery 100, the plurality of battery cells 20 are first connected in series, in parallel, or in series-parallel to form battery modules, and then the plurality of battery modules are connected in series, in parallel, or in series-parallel to form a whole, the whole being accommodated in the case 10.

In some embodiments, the battery 100 may further include other structures. For example, the battery 100 may further include a busbar component, and the busbar component is configured to connect the plurality of battery cells 20 to achieve an electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be rectangular parallelepiped-shaped, prismatic, or in other shapes. Illustratively, in FIG. 3, the battery cell 20 is of a rectangular parallelepiped structure.

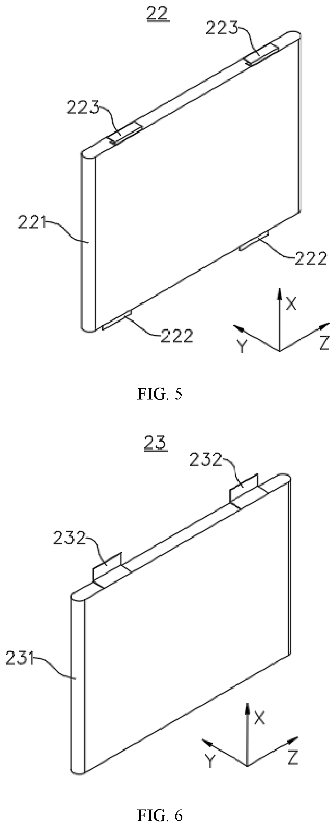

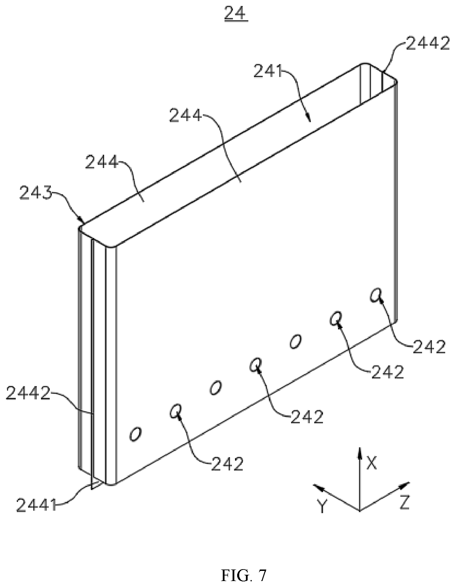

According to some embodiments of the present application, referring to FIG. 3, and further referring to FIGs. 4, 5, 6, and 7, FIG. 4 is an exploded view of a structure of a battery cell 20 according to some embodiments of the present application, FIG. 5 is a schematic structural diagram of a first electrode assembly 22 of a battery cell 20 according to some embodiments of the present application, FIG. 6 is a schematic structural diagram of a second electrode assembly 23 of a battery cell 20 according to some embodiments of the present application, and FIG. 7 is a schematic structural diagram of an accommodating member 24 of a battery cell 20 according to some embodiments of the present application. The present application provides a battery cell 20. The battery cell 20 includes a housing 21, a first electrode assembly 22, a second electrode assembly 23, and an accommodating member 24. The housing 21 is provided with a first wall 211. The first electrode assembly 22 and the second electrode assembly 23 are both accommodated in the housing 21 and arranged in a thickness direction X of the first wall, the second electrode assembly 23 is located between the first wall 211 and the first electrode assembly 22, and the first wall 211 is configured to support the second electrode assembly 23. The accommodating member 24 is disposed in the housing 21, an accommodating cavity 241 is formed inside the accommodating member 24, and the accommodating cavity 241 accommodates the first electrode assembly 22 and an electrolytic solution.

The housing 21 may also be configured to accommodate the electrolytic solution. The housing 21 may also be made of various materials, such as copper, iron, aluminum, steel, or aluminum alloy.

In some embodiments, the housing 21 may include a housing body 212 and an end cover 213; an accommodating space is formed inside the housing body 212, the accommodating space is configured to accommodate the first electrode assembly 22 and the second electrode assembly 23, and the accommodating space is provided with a second opening 2121. That is, the housing body 212 is a hollow structure with the second opening 2121 formed at one end, and the end cover 213 covers the second opening 2121 of the housing body 212 and forms a sealed connection, so as to form a sealed space for accommodating the first electrode assembly 22, the second electrode assembly 23, and the electrolytic solution.

During the assembly of the battery cell 20, the first electrode assembly 22 and the second electrode assembly 23 may first be placed into the housing body 212, and the electrolytic solution is filled into the housing body 212, and then the end cover 213 is used to cover the second opening 2121 of the housing body 212, so as to complete the assembly of the battery cell 20.

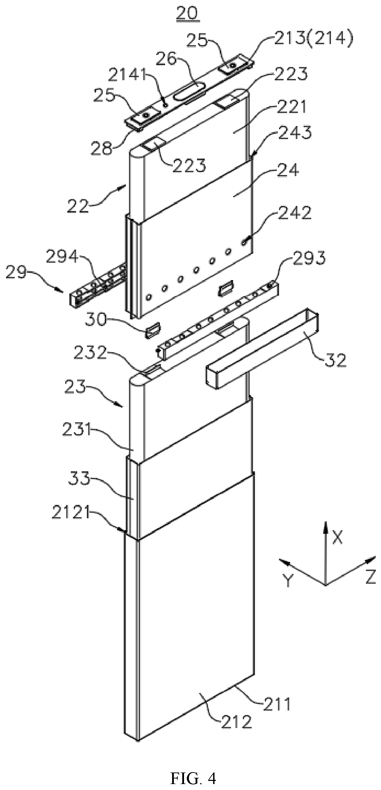

The housing body 212 may be in various shapes, such as a rectangular parallelepiped or a prismatic structure. Certainly, the structure of the end cover 213 may also be of various types. For example, the end cover 213 is of a plate-shaped structure, a hollow structure with one end open, or the like. Illustratively, in FIG. 4, the housing body 212 is of a rectangular parallelepiped structure, and the end cover 213 is of a plate-shaped structure.

It should be noted that the first wall 211 configured to support the second electrode assembly 23 may be an end cover 213 of the housing 21 or a wall of the housing body 212. Illustratively, in FIGs. 3 and 4, the first wall 211 is a bottom wall of the housing body 212 disposed opposite to the end cover 213. Correspondingly, the housing 21 further includes a second wall 214, and the second wall 214 is disposed opposite to the first wall 211 in the thickness direction X of the first wall. That is, the second wall 214 is the end cover 213. Certainly, in some embodiments, the first wall 211 may also be an end cover 213 of the housing 21 or a side wall of the housing body 212 of the housing 21 connected to and adjacent to the end cover 213.

The first wall 211 is configured to support the second electrode assembly 23; that is, the gravity of the second electrode assembly 23 acts on the first wall 211. That is, the first electrode assembly 22, the second electrode assembly 23, and the first wall 211 are structures arranged in the direction of gravity, and the second electrode assembly 23 is placed on the first wall 211 in the direction of gravity.

Certainly, it can be understood that the housing 21 is not merely limited to the above structure, and the housing 21 may also be of other structures. For example, the housing 21 may include a housing body 212 and two end covers 213, the housing body 212 is a hollow structure with second openings 2121 on two opposite sides, and one end cover 213 correspondingly covers one second opening 2121 of the housing body 212 and forms a sealed connection, so as to form a sealed space for accommodating the electrode assembly and the electrolytic solution. That is, the second opening 2121 is formed on each of the two opposite sides of the housing body 212, and the two end covers 213 cover the two sides of the housing body 212, respectively, so as to close the corresponding second openings 2121.

The first electrode assembly 22 and the second electrode assembly 23 are components in the battery cell 20 in which electrochemical reactions occur. The structure of the first electrode assembly 22 and the structure of the second electrode assembly 23 may be of various types. For example, the first electrode assembly 22 and the second electrode assembly 23 may be wound-type structures formed by winding a positive electrode plate, a separator, and a negative electrode plate, or may be stacked-type structures formed by stacking a positive electrode plate, a separator, and a negative electrode plate. Illustratively, in FIG. 4, the first electrode assembly 22 and the second electrode assembly 23 are both wound-type structures formed by winding a positive electrode plate, a separator, and a negative electrode plate, and a winding axis of the first electrode assembly 22 and a winding axis of the second electrode assembly 23 extend in the thickness direction X of the first wall; that is, the axial direction of the first electrode assembly 22 and the axial direction of the second electrode assembly 23 are consistent with the thickness direction X of the first wall.

Illustratively, the separator is a separation film, and the main material of the separation film may be selected from at least one of glass fiber, non-woven fabric, polyethylene, polypropylene, and polyvinylidene fluoride.

The first electrode assembly 22 and the second electrode assembly 23 are arranged in the thickness direction X of the first wall, and the second electrode assembly 23 is located between the first wall 211 and the first electrode assembly 22. That is, the first electrode assembly 22 and the second electrode assembly 23 are structures disposed in an overlapping manner in the thickness direction X of the first wall, and the first electrode assembly 22 is located on a side, facing away from the first wall 211, of the second electrode assembly 23.

Illustratively, in FIG. 4, in the thickness direction X of the first wall, the battery cell 20 only includes one first electrode assembly 22 and one second electrode assembly 23 disposed in an overlapping manner. Certainly, in other embodiments, the battery cell 20 may further include a plurality of first electrode assemblies 22 disposed in an overlapping manner on a side of the second electrode assembly 23 in the thickness direction X of the first wall, and every two adjacent first electrode assemblies 22 in the thickness direction X of the first wall are electrically connected to each other.

Optionally, in the thickness direction X of the first wall, the first electrode assembly 22 and the second electrode assembly 23 located at the same position may be one electrode assembly, or may be a plurality of electrode assemblies stacked in a thickness direction of the battery cell 20. That is, the battery cell 20 includes, along the battery cell 20, one set of first electrode assemblies 22 and one set of second electrode assemblies 23 stacked in the thickness direction X of the first wall. Each set of first electrode assemblies 22 includes a plurality of first electrode assemblies 22 stacked in the thickness direction of the battery cell 20. Correspondingly, each set of second electrode assemblies 23 includes a plurality of second electrode assemblies 23 stacked in the thickness direction of the battery cell 20. The thickness direction of the battery cell 20 is perpendicular to the thickness direction X of the first wall, and the thickness direction of the battery cell 20 is a first direction Y.

In some embodiments, referring to FIGs. 3 and 4, the battery cell 20 may further include two electrode terminals 25. The two electrode terminals 25 are both mounted on the housing 21 in an insulated manner. The two electrode terminals 25 are both configured to be electrically connected to the first electrode assembly 22 or the second electrode assembly 23 to output or input electrical energy of the battery cell 20. The two electrode terminals 25 are configured to output or input a positive electrode and a negative electrode of the battery cell 20, respectively.

The electrode terminals 25 are mounted on the housing 21 in an insulated manner; that is, no electrical connection is formed between the electrode terminals 25 and the housing 21. The electrode terminals 25 may be disposed on the end cover 213 of the housing 21, or may be disposed on the housing body 212 of the housing 21. Illustratively, in FIGs. 3 and 4, the electrode terminals 25 are disposed on the end cover 213.

Optionally, the electrode terminal 25 serves to output or input the electrical energy of the battery cell 20; the electrode terminal 25 may be made of various materials, such as copper, iron, aluminum, steel, or aluminum alloy.

In some embodiments, referring to FIGs. 3 and 4, the battery cell 20 may further include a pressure relief mechanism 26. The pressure relief mechanism 26 is disposed on the housing 21, and the pressure relief mechanism 26 is configured to relieve the pressure inside the battery cell 20 when the internal pressure or temperature of the battery cell 20 reaches a predetermined value.

Optionally, the pressure relief mechanism 26 may be disposed on the end cover 213 of the housing 21, or may be disposed on the housing body 212 of the housing 21. Illustratively, in FIGs. 3 and 4, the pressure relief mechanism 26 is disposed on the end cover 213.

Similarly, the pressure relief mechanism 26 and the housing 21 may be of an integrally formed structure, or may be of a separately provided structure. Illustratively, in FIG. 4, the pressure relief mechanism 26 and the housing 21 are of a split-type structure. The pressure relief mechanism 26 may be connected to the housing 21 by welding or the like. Correspondingly, the pressure relief mechanism 26 may be a pressure relief component such as an anti-explosion valve, an anti-explosion sheet, a gas valve, a pressure relief valve, or a safety valve. Certainly, in other embodiments, the pressure relief mechanism 26 and the housing 21 may also be of an integrally formed structure, and the pressure relief mechanism 26 is a region of the housing 21 where a weak structure is formed, for example, a region of the housing 21 where a score groove is provided.

The first electrode assembly 22 and the second electrode assembly 23 that are arranged in the thickness direction X of the first wall are disposed in the housing 21, the second electrode assembly 23 is located between the first wall 211 and the first electrode assembly 22, and the first wall 211 is configured to support the second electrode assembly 23, such that the first electrode assembly 22 is a structure located on an upper side of the second electrode assembly 23. The accommodating member 24 is disposed in the housing 21, and the accommodating cavity 241 that is configured to accommodate the first electrode assembly 22 and the electrolytic solution is formed inside the accommodating member 24, such that the first electrode assembly 22 is a structure accommodated inside the accommodating member 24. In addition, the accommodating member 24 can also accommodate the electrolytic solution. This can effectively alleviate the poor wetting performance of the first electrode assembly 22 by the electrolytic solution caused by the electrolytic solution in the housing 21 settling in the thickness direction X of the first wall, such that the first electrode assembly 22 located on the upper side of the second electrode assembly 23 can be sufficiently wet by the electrolytic solution accommodated in the accommodating member 24, thereby helping to improve the wetting performance of the first electrode assembly 22, and thus improving the service performance of the battery cell 20.

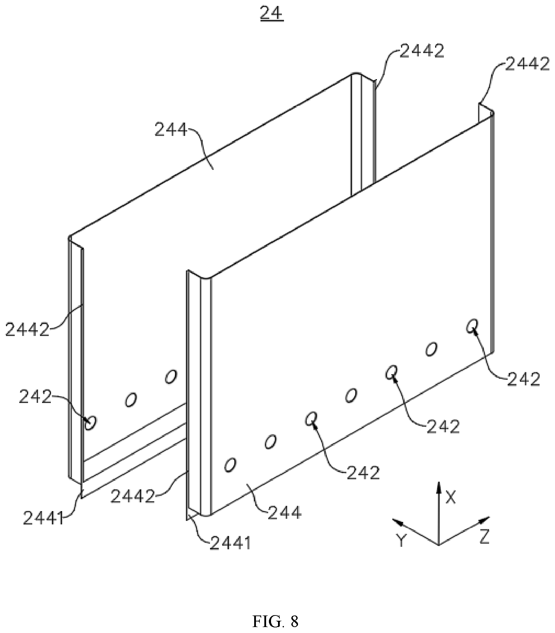

According to some embodiments of the present application, referring to FIGs. 4 and 7, and further referring to FIG. 8, FIG. 8 is an exploded view of a structure of an accommodating member 24 of a battery cell 20 according to some embodiments of the present application. A first through hole 242 is provided on an outer peripheral surface of the accommodating member 24, the first through hole 242 is in communication with the accommodating cavity 241, and in the thickness direction X of the first wall, the first through hole 242 is located between end surfaces at two ends of the first electrode assembly 22.

The first through hole 242 is in communication with the accommodating cavity 241; that is, the first through hole 242 disposed on the outer peripheral surface of the accommodating member 24 extends through a cavity wall surface of the accommodating cavity 241, such that the electrolytic solution in the accommodating member 24 can overflow into the housing 21 through the first through hole 242.

It should be noted that referring to FIGs. 4 and 5, the first electrode assembly 22 includes a first main body 221, and a first tab 222 and a third tab 223 that are connected to two ends of the first main body 221 in the thickness direction X of the first wall, such that end surfaces at two ends of the first electrode assembly 22 in the thickness direction X of the first wall are end surfaces at two ends of the first main body 221 in the thickness direction X of the first wall, respectively. That is, in the thickness direction X of the first wall, the first through hole 242 is located between the end surfaces at the two ends of the first electrode assembly 22; that is, the first through hole 242 is located between the two ends of the first main body 221 of the first electrode assembly 22 in the thickness direction X of the first wall. As a result, in the thickness direction X of the first wall, the two ends of the first main body 221 separately extend beyond the first through hole 242, enabling at least a portion of the first main body 221 of the first electrode assembly 22 to be immersed in the electrolytic solution in the accommodating cavity 241 of the accommodating member 24. In the embodiments where the first main body 221 of the first electrode assembly 22 fills the accommodating cavity 241 of the accommodating member 24, the projection of the first through hole 242 in an axial direction thereof is within the first main body 221 of the first electrode assembly 22.

The first through hole 242 in communication with the accommodating cavity 241 inside the accommodating member 24 is provided on the outer peripheral surface of the accommodating member 24, and the first through hole 242 is located between the end surfaces of the two ends of the first electrode assembly 22 in the thickness direction X of the first wall, such that a portion of the first electrode assembly 22 is located on a lower side of the first through hole 242 in the first direction Y. As a result, the electrolytic solution accommodated in the accommodating member 24 can effectively wet the first electrode assembly 22, and excess electrolytic solution in the accommodating cavity 241 of the accommodating member 24 can overflow out of the accommodating cavity 241 through the first through hole 242 to wet the second electrode assembly 23 located outside the accommodating member 24, thereby improving the utilization rate of the electrolytic solution while improving the wetting performance of the first electrode assembly 22 by the electrolytic solution, and improving the wetting performance of the second electrode assembly 23.

It should be noted that one or a plurality of first through holes 242 disposed on the outer peripheral surface of the accommodating member 24 may be provided. In some embodiments, referring to FIGs. 7 and 8, a plurality of first through holes 242 are provided on the accommodating member 24, and the plurality of first through holes 242 are spaced apart from each other in a circumferential direction of the first electrode assembly 22.

The plurality of first through holes 242 are spaced apart from each other in the circumferential direction of the first electrode assembly 22; that is, the arrangement structure of the plurality of first through holes 242 is a structure disposed surrounding the accommodating member 24.

The plurality of first through holes 242 are provided on the accommodating member 24, and the plurality of first through holes 242 are structures spaced apart from each other in the circumferential direction of the first electrode assembly 22, thereby improving the efficiency of the electrolytic solution overflowing out of the accommodating cavity 241, such that excess electrolytic solution can quickly overflow out of the accommodating cavity 241 and then contact the second electrode assembly 23 to wet the second electrode assembly 23.

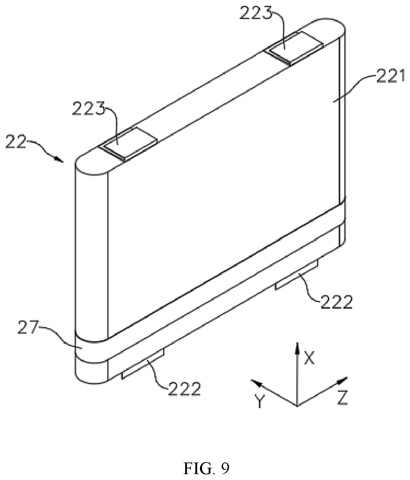

According to some embodiments of the present application, referring to FIGs. 4, 7, and 8, and further referring to FIG. 9, FIG. 9 is a schematic diagram of an assembly of a first electrode assembly 22 and a first insulating member 27 of a battery cell 20 according to some embodiments of the present application. The battery cell 20 may further include a first insulating member 27. The first insulating member 27 is disposed between the first electrode assembly 22 and the accommodating member 24, and the projection of the first through hole 242 in the axial direction thereof is located within the first insulating member 27.

The first insulating member 27 is disposed between the first electrode assembly 22 and the accommodating member 24; that is, the first insulating member 27 is disposed on an outer side of the first electrode assembly 22 and located on an inner side of the accommodating member 24. Illustratively, in FIG. 9, the first insulating member 27 is disposed on an outer side of the first main body 221 of the first electrode assembly 22.

The projection of the first through hole 242 in the axial direction thereof is located within the first insulating member 27; that is, in the axial direction of the first through hole 242, the first insulating member 27 covers the first through hole 242, such that only the first insulating member 27 can be contacted through the first through hole 242, while the first electrode assembly 22 cannot be directly contacted.

The first insulating member 27 serves to insulate and isolate the first electrode assembly 22 from other components; the first insulating member 27 may be made of various materials, such as plastic, rubber, or silicone.

It should be noted that the structure of the first insulating member 27 assembled between the first electrode assembly 22 and the accommodating member 24 may be of various types. For example, the first insulating member 27 may be a structure adhesively bonded to the outer side of the first main body 221 of the first electrode assembly 22, or may be a structure wound around an outer peripheral side of the first main body 221 of the first electrode assembly 22. Certainly, the first insulating member 27 may also be a structure connected to an inner surface of the accommodating member 24.

The first insulating member 27 is disposed between the first electrode assembly 22 and the accommodating member 24, and the projection of the first through hole 242 in the axial direction thereof is located within the first insulating member 27, such that the first insulating member 27 can play a certain shielding role for a region of the first electrode assembly 22 corresponding to the first through hole 242, thereby reducing the risk of short circuit between other components and the first electrode assembly 22 after the other components pass through the first through hole 242, and thus helping to improve the use reliability of the battery cell 20.

In some embodiments, referring to FIG. 9, the first insulating member 27 is disposed surrounding the first electrode assembly 22 around an axis extending in the thickness direction X of the first wall. That is, the first insulating member 27 is an annular structure disposed on and surrounding the first electrode assembly 22 in the circumferential direction of the first electrode assembly 22, such that the first insulating member 27 is disposed surrounding the first electrode assembly 22.

Illustratively, the first insulating member 27 surrounds the outer side of the first main body 221 of the first electrode assembly 22 around the axis extending in the thickness direction X of the first wall.

Configuring the first insulating member 27 as a structure surrounding the outer side of the first electrode assembly 22, in one aspect, can improve the structural stability of the first insulating member 27 assembled between the first electrode assembly 22 and the accommodating member 24, thereby helping to reduce the risk of detachment of the first insulating member 27 during use, and in another aspect, can further improve the shielding effect of the first insulating member 27 on the region of the first electrode assembly 22 corresponding to the first through hole 242, thereby further reducing the risk of short circuit between other components and the first electrode assembly 22 after the other components pass through the first through hole 242.

In some embodiments, with further reference to FIG. 9, the first insulating member 27 is adhesively bonded to the first electrode assembly 22.

Illustratively, the structure of the first insulating member 27 may be of various types. For example, the first insulating member 27 may be insulating adhesive paper or insulating adhesive tape adhesively bonded to the first electrode assembly 22, or the like. Certainly, the first insulating member 27 may also be an insulating film provided with an adhesive layer on a side facing the first electrode assembly 22, or the like; the adhesive layer may be glue, double-sided adhesive tape, or the like, and the material of the insulating film may be rubber, silicone, plastic, or the like.

The first insulating member 27 is configured as a structure adhesively bonded to the outer side of the first electrode assembly 22, such that the structural stability of the first insulating member 27 disposed on the first electrode assembly 22 can be further improved, and the difficulty of assembling the first insulating member 27 between the first electrode assembly 22 and the accommodating member 24 can be reduced, thereby helping to improve the assembly efficiency of the battery cell 20.

According to some embodiments of the present application, referring to FIGs. 3 and 4, in the thickness direction X of the first wall, the housing 21 is provided with a second wall 214 disposed opposite to the first wall 211, a liquid injection hole 2141 is provided on the second wall 214, and the liquid injection hole 2141 is in communication with the accommodating cavity 241.

The housing 21 is provided with the second wall 214 disposed opposite to the first wall 211; that is, the housing 21 is further provided with the second wall 214. The second wall 214 and the first wall 211 are disposed opposite to each other in the thickness direction X of the first wall; that is, the first wall 211 and the second wall 214 are end walls at two ends of the housing 21 in the thickness direction X of the first wall, respectively.

The liquid injection hole 2141 for performing primary liquid injection or secondary liquid injection into the housing 21 is provided on the second wall 214, and the liquid injection hole 2141 is in communication with the accommodating cavity 241, such that the through-hole liquid injection hole 2141 can directly inject the electrolytic solution into the accommodating cavity 241 of the accommodating member 24 to wet the first electrode assembly 22. It should be noted that in the embodiments where the first through hole 242 is provided on the accommodating member 24, after the electrolytic solution is injected into the accommodating cavity 241 of the accommodating member 24 through the liquid injection hole 2141, excess electrolytic solution can also wet the second electrode assembly 23 after overflowing through the first through hole 242, thereby eliminating the need to provide other liquid injection holes 2141 on the housing 21. Certainly, in the embodiments where no first through hole 242 is provided on the accommodating member 24, a second liquid injection hole 2141 needs to be provided on other walls of the housing 21, thereby facilitating the injection of the electrolytic solution into the housing 21, and enabling the wetting of the second electrode assembly 23.

It should be noted that the liquid injection hole 2141 and the accommodating cavity 241 of the accommodating member 24 may be connected to each other by various structures. The situation may be that a first opening 243 is formed at an end, close to the first wall 211, of the accommodating member 24 in the thickness direction X of the first wall, and the first opening 243 is in direct communication with the liquid injection hole 2141. The situation may also be that the liquid injection hole 2141 is in communication with the accommodating cavity 241 of the accommodating member 24 by means of other communicating members; that is, one end of the communicating member is in communication with the liquid injection hole 2141, and the other end of the communicating member extends into the accommodating cavity 241 of the accommodating member 24.

The liquid injection hole 2141 is provided on the second wall 214 of the housing 21, and the liquid injection hole 2141 is in communication with the accommodating cavity 241 of the accommodating member 24, such that the electrolytic solution can be directly injected into the accommodating cavity 241 of the accommodating member 24 through the liquid injection hole 2141, without the need to first introduce the electrolytic solution into the accommodating member 24 and then assemble the accommodating member 24 into the housing 21. This is conducive to optimizing the assembly process of the battery cell 20 and can reduce the difficulty of introducing the electrolytic solution into the accommodating cavity 241 of the accommodating member 24, thereby improving the production efficiency of the battery cell 20. In addition, in the embodiments where the first through hole 242 is provided on the outer peripheral surface of the accommodating member 24, for the battery cell 20 adopting such a structure, after the electrolytic solution can be directly injected into the accommodating cavity 241 of the accommodating member 24 through the liquid injection hole 2141, the electrolytic solution can also overflow into the housing 21 through the first through hole 242 to wet the second electrode assembly 23, thereby eliminating the need to separately provide the liquid injection hole 2141 for the second electrode assembly 23, and thus achieving the effect of wetting the first electrode assembly 22 and the second electrode assembly 23 through one liquid injection. The operation is simple, which can effectively reduce the assembly difficulty of the battery cell 20 and can optimize the takt time of the battery cell 20.

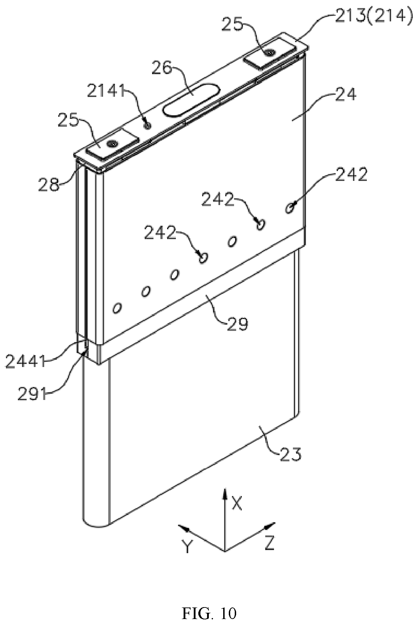

According to some embodiments of the present application, referring to FIGs. 3 and 4, and further referring to FIG. 10, FIG. 10 is a schematic diagram of an assembly of an accommodating member 24 and a second insulating member 28 of a battery cell 20 according to some embodiments of the present application. In the thickness direction X of the first wall, the housing 21 is provided with a second wall 214 disposed opposite to the first wall 211. The battery cell 20 may further include a second insulating member 28. The second insulating member 28 is disposed on a side, facing the first electrode assembly 22, of the second wall 214, the second insulating member 28 is configured to insulate and isolate the second wall 214 from the first electrode assembly 22, and an end, facing the second wall 214, of the accommodating member 24 in the thickness direction X of the first wall is connected to the second insulating member 28.

The second insulating member 28 is disposed in the housing 21 and located between the second wall 214 and the first electrode assembly 22, such that the second insulating member 28 serves to insulate and isolate the second wall 214 from the first electrode assembly 22. The second insulating member 28 may be made of various materials, such as rubber, silicone, or plastic.

The end, facing the second wall 214, of the accommodating member 24 in the thickness direction X of the first wall is connected to the second insulating member 28; that is, an end, away from the second electrode assembly 23, of the accommodating member 24 in the thickness direction X of the first wall is connected to the second insulating member 28. The connecting structure between the accommodating member 24 and the second insulating member 28 may be of various types, such as hot-melting connection or adhesive bonding. It should be noted that in the embodiments where the first opening 243 is formed at an end, close to the second wall 214, of the accommodating member 24 and the first opening 243 is in communication with the liquid injection hole 2141, the end of the accommodating member 24 provided with the first opening 243 is connected to the second insulating member 28.

The second insulating member 28 is further disposed in the housing 21 of the battery cell 20, and the second insulating member 28 is disposed between the second wall 214 and the first electrode assembly 22, such that the second insulating member 28 can serve to insulate and isolate the first electrode assembly 22 from the second wall 214, thereby reducing the risk of short circuit between the first electrode assembly 22 and the second wall 214. In addition, connecting the end, close to the second wall 214, of the accommodating member 24 in the thickness direction X of the first wall to the second insulating member 28 is conducive to further improving the structural stability of the accommodating member 24 assembled in the housing 21, thereby reducing the wobbling of the accommodating member 24 during use, and alleviating the overall gravity of the accommodating member 24 and the first electrode assembly 22 acting on the second electrode assembly 23.

In some embodiments, the accommodating member 24 is in hot-melting connection to the second insulating member 28.

A hot-melting connection structure is provided between the accommodating member 24 and the second insulating member 28 to achieve the connection between the accommodating member 24 and the second insulating member 28. This achieves a simple structure and relatively high connection stability, and helps to improve the sealing effect after the accommodating member 24 and the second insulating member 28 are connected to each other.

In some embodiments, the first opening 243 is formed at an end, close to the second wall 214, of the accommodating cavity 241 in the thickness direction X of the first wall, and the second insulating member 28 closes the first opening 243.

The first opening 243 serves to be in communication with the liquid injection hole 2141, and the first opening 243 is provided at an end of the accommodating member 24 to facilitate the assembly of the first electrode assembly 22 into the accommodating cavity 241 of the accommodating member 24.

The first opening 243 is formed at the end, close to the second wall 214, of the accommodating cavity 241 of the accommodating member 24 in the thickness direction X of the first wall, and the first opening 243 is closed by a third insulating member 33, thereby facilitating the injection of the electrolytic solution into the accommodating cavity 241 through the first opening 243. In addition, the first opening 243 of the accommodating member 24 can be closed by the second insulating member 28, without the need to separately design a process for closing the first opening 243 of the accommodating member 24, thereby helping to optimize the takt time of the battery cell 20.

According to some embodiments of the present application, referring to FIGs. 4, 7, and 8, the accommodating member 24 may include two films 244. The two films 244 are arranged in the first direction Y, and the two films 244 jointly define, in an enclosing manner, the accommodating cavity 241. An end, close to the first wall 211, of each film 244 in the thickness direction X of the first wall forms a first connection region 2441, and the first connection regions 2441 of the two films 244 are stacked and connected to each other. Two ends of each film 244 in a second direction Z form two second connection regions 2442, respectively, and the second connection regions 2442 of the two films 244 are correspondingly stacked and connected to each other. Every two of the thickness direction X of the first wall, the first direction Y, and the second direction Z are perpendicular to each other.

The first direction Y is the thickness direction of the battery cell 20, is also a thickness direction of the film 244, and is also a stacking direction of the first connection regions 2441 of the two films 244 or a stacking direction of the second connection regions 2442 of the two films 244.

The accommodating member 24 includes two films 244, and the two films 244 jointly define, in an enclosing manner, the accommodating cavity 241; that is, the first electrode assembly 22 is disposed between the two films 244, and the two films 244 are fitted to wrap around the outer side of the first electrode assembly 22.

Optionally, the structures of the two films 244 may be of various types. Illustratively, in FIG. 8, the two films 244 are two components disposed independently, and the two films 244 are arranged in the first direction Y and connected to each other to form the accommodating cavity 241. Certainly, in other embodiments, the two films 244 may also be of a structure with two films 244 formed by folding one component in half, enabling the two films 244 to be arranged in the first direction Y. Certainly, in other embodiments, the accommodating member 24 may also be of other structures. For example, the accommodating member 24 is an integrated structure formed by an integral forming process such as injection molding or inflation. That is, the accommodating member 24 is a hollow structure with one end open. In such embodiments, the accommodating member 24 may not be provided with the first connection region 2441 and the second connection region 2442.

The end, close to the first wall 211, of each film 244 in the thickness direction X of the first wall forms the first connection region 2441, and the first connection regions 2441 of the two films 244 are stacked and connected to each other. That is, an edge region at an end, close to the second electrode assembly 23, of each film 244 in the thickness direction X of the first wall forms the first connection region 2441. The first connection regions 2441 of the two films 244, after being stacked in the first direction Y and connected to each other, can seal the opening at the end, close to the second electrode assembly 23, of the accommodating member 24 in the thickness direction X of the first wall. Correspondingly, edges of ends, away from the second electrode assembly 23, of the two films 244 in the thickness direction X of the first wall are not connected to each other, thereby defining, in an enclosing manner, to form the first opening 243 of the accommodating member 24.

The two ends of the film 244 in the second direction Z form the two second connection regions 2442, respectively, and the second connection regions 2442 of the two films 244 are correspondingly stacked and connected to each other. That is, edge regions at the two ends of the film 244 in the second direction Z form the two second connection regions 2442, respectively, and the second connection regions 2442 of the two films 244, after being correspondingly stacked in the first direction Y and connected to each other, can seal openings at two ends of the accommodating member 24 in the second direction Z, such that the accommodating member 24 can be a hollow structure with the first opening 243 formed at the end of the accommodating member in the thickness direction X of the first wall.

The accommodating member 24 is provided with two films 244 arranged in the first direction Y. The first connection regions 2441 of the two films 244 are stacked and connected to each other, and the second connection regions 2442 at the two ends of the two films 244 in the second direction Z are stacked and connected to each other, such that the two films 244 are connected to each other to jointly define, in an enclosing manner, the accommodating cavity 241 configured to accommodate the first electrode assembly 22 and the electrolytic solution. The structure is simple and easy to implement.

In some embodiments, the first connection regions 2441 of the two films 244 are in hot-melting connection. The second connection regions 2442 of the two films 244 are in hot-melting connection.

It should be noted that in other embodiments, the first connection regions 2441 of the two films 244 may also be connected to each other by adhesive bonding or the like. For example, an adhesive layer such as glue or double-sided adhesive tape is provided between the first connection regions 2441 of the two films 244, such that the first connection regions 2441 of the two films 244 can be adhesively bonded to each other. Similarly, the second connection regions 2442 of the two films 244 may also be connected to each other by adhesive bonding or the like. For example, an adhesive layer such as glue or double-sided adhesive tape is provided between the second connection regions 2442 of the two films 244, such that the second connection regions 2442 of the two films 244 can be adhesively bonded to each other.

The first connection regions 2441 of the two films 244 are connected to each other by a hot-melting connection structure. This achieves a simple structure and relatively high stability, and helps to improve the sealing effect after the two first connection regions 2441 are connected to each other. Similarly, the second connection regions 2442 of the two films 244 are connected to each other by a hot-melting connection structure. This achieves a simple structure and relatively high stability, and helps to improve the sealing effect after the two second connection regions 2442 are connected to each other.

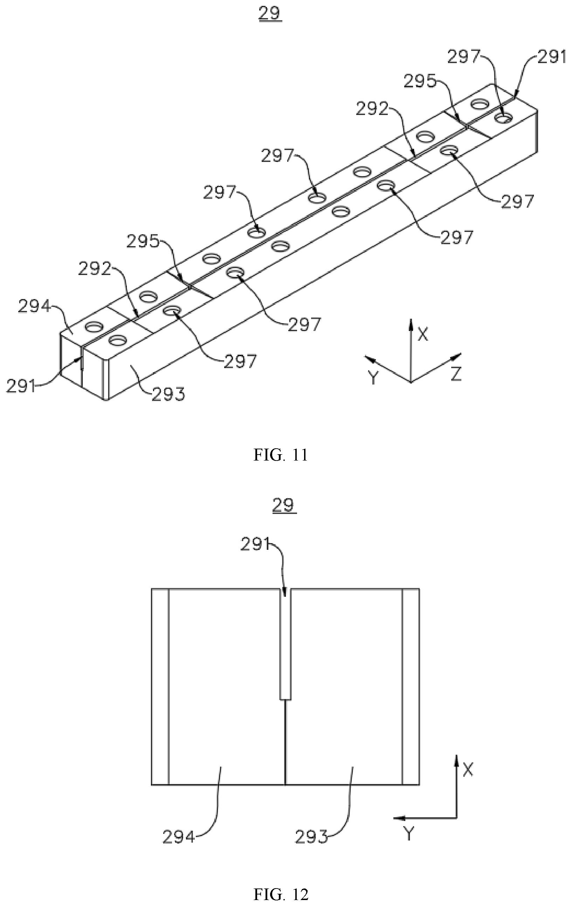

According to some embodiments of the present application, referring to FIGs. 4, 5, 6, and 10, and further referring to FIGs. 11 and 12, FIG. 11 is a schematic structural diagram of a mounting frame 29 of a battery cell 20 according to some embodiments of the present application, and FIG. 12 is a front view of a mounting frame 29 of a battery cell 20 in a second direction Z according to some embodiments of the present application. The first electrode assembly 22 includes a first main body 221 and a first tab 222 connected to each other, the second electrode assembly 23 includes a second main body 231 and a second tab 232 connected to each other, the second main body 231 and the first main body 221 are arranged in the thickness direction X of the first wall, and the first tab 222 is electrically connected to the second tab 232 to electrically connect the first electrode assembly 22 and the second electrode assembly 23. The battery cell 20 may further include a mounting frame 29, and the mounting frame 29 is accommodated in the housing 21 and located on the outer side of the accommodating member 24. In the thickness direction X of the first wall, the mounting frame 29 is disposed between the first main body 221 and the second main body 231, and the mounting frame 29 is configured to separate the first main body 221 from the second main body 231. A clearance groove 291 is provided on a side, facing the first main body 221, of the mounting frame 29 in the thickness direction X of the first wall, and the clearance groove 291 is configured to accommodate the first connection regions 2441 of the two films 244.

The first main body 221 of the first electrode assembly 22 is a region where the first electrode assembly 22 undergoes a chemical reaction within the battery cell 20. The first main body 221 is a structure formed by winding a region of a positive electrode plate coated with a positive electrode active substance layer, a separator, and a region of a negative electrode plate coated with a negative electrode active substance layer. The first main body works mainly by relying on the movement of metal ions between the positive electrode plate and the negative electrode plate having opposite polarities.

The first tab 222 is a positive electrode or a negative electrode configured to be electrically connected to the second tab 232 of the second electrode assembly 23. If the first tab 222 is configured to input or output a positive electrode of the first electrode assembly 22, the first tab 222 is a component formed by stacking and connecting regions of a positive electrode plate not coated with a positive electrode active substance layer. If the first tab 222 is configured to output or input a negative electrode of the first electrode assembly 22, the first tab 222 is a component formed by stacking and connecting regions of a negative electrode plate not coated with a negative electrode active substance layer. Each first electrode assembly 22 is provided with two first tabs 222, and the two first tabs 222 are both connected to an end, facing the second electrode assembly 23, of the first main body 221 in the thickness direction X of the first wall. The two first tabs 222 have different polarities; that is, the two first tabs 222 of each first electrode assembly 22 are respectively a positive electrode and a negative electrode configured to be electrically connected to the second tabs 232 of the second electrode assembly 23.

Similarly, the second main body 231 of the second electrode assembly 23 is a region where the second electrode assembly 23 undergoes a chemical reaction within the battery cell 20. The second main body 231 is a structure formed by winding a region of a positive electrode plate coated with a positive electrode active substance layer, a separator, and a region of a negative electrode plate coated with a negative electrode active substance layer. The second main body works mainly by relying on the movement of metal ions between the positive electrode plate and the negative electrode plate having opposite polarities.

The second tab 232 is a positive electrode or a negative electrode configured to be electrically connected to the first tab 222 of the first electrode assembly 22. If the second tab 232 is configured to input or output a positive electrode of the second electrode assembly 23, the second tab 232 is a component formed by stacking and connecting regions of a positive electrode plate not coated with a positive electrode active substance layer. If the second tab 232 is configured to output or input a negative electrode of the second electrode assembly 23, the second tab 232 is a component formed by stacking and connecting regions of a negative electrode plate not coated with a negative electrode active substance layer. Each second electrode assembly 23 is provided with two second tabs 232, and the two second tabs 232 are both connected to an end, facing the first electrode assembly 22, of the second main body 231 in the thickness direction X of the first wall. The two second tabs 232 have different polarities; that is, the two second tabs 232 of each second electrode assembly 23 are respectively a positive electrode and a negative electrode configured to be electrically connected to the first tabs 222 of the first electrode assembly 22.

In FIGs. 4 and 5, the first electrode assembly 22 may further include a third tab 223. The third tab 223 is connected to an end, away from the first tab 222, of the first main body 221 in the thickness direction X of the first wall, and the third tab 223 is located at an end, facing the electrode terminal 25, of the first main body 221. The third tab 223 is configured to be electrically connected to the electrode terminal 25 to output or input electrical energy of the first electrode assembly 22 and the second electrode assembly 23.

The third tab 223 is configured to output or input the positive electrode or the negative electrode of the first electrode assembly 22. If the third tab 223 is configured to input or output the positive electrode of the first electrode assembly 22, the third tab 223 is a component formed by stacking and connecting the regions of the positive electrode plate not coated with the positive electrode active substance layer. If the third tab 223 is configured to output or input the negative electrode of the first electrode assembly 22, the third tab 223 is a component formed by stacking and connecting the regions of the negative electrode plate not coated with the negative electrode active substance layer. Each first electrode assembly 22 is provided with two third tabs 223, and the two third tabs 223 are both connected to the end, facing the electrode terminal 25, of the first main body 221 in the thickness direction X of the first wall. The two third tabs 223 have different polarities, and the two third tabs 223 are connected to two electrode terminals 25, respectively; that is, the two third tabs 223 of each first electrode assembly 22 are configured to output the positive electrode and the negative electrode of the first electrode assembly 22, respectively.

The mounting frame 29 is assembled between the first main body 221 and the second main body 231, serving to separate and support the first main body 221 and the second main body 231. The mounting frame 29 may be made of various materials, such as rubber, silicone, or plastic.

Illustratively, in FIG. 10, the first main body 221 of the first electrode assembly 22 is assembled in the accommodating member 24, such that an end, close to the second main body 231, of the first main body 221 in the thickness direction X of the first wall indirectly abuts against the mounting frame 29 by means of the accommodating member 24, and an end, close to the first main body 221, of the second main body 231 in the thickness direction X of the first wall abuts against the mounting frame 29.

The clearance groove 291 is provided on the side, facing the first main body 221, of the mounting frame 29 in the thickness direction X of the first wall, and the clearance groove 291 is configured to accommodate the first connection regions 2441 of the two films 244. That is, the first connection regions 2441 of the two films 244, after being stacked and connected to each other, are inserted into the clearance groove 291, enabling the first connection regions 2441 to share a portion of the space with the mounting frame 29 in the thickness direction X of the first wall.

The mounting frame 29 is disposed between the first main body 221 and the second main body 231 that are arranged in the thickness direction X of the first wall, such that the mounting frame 29 can separate the first main body 221 from the second main body 231. In one aspect, the mounting frame 29 can serve to stably assemble the first main body 221 and the second main body 231, which is conducive to reducing the stability of the first electrode assembly 22 and the second electrode assembly 23 assembled into the housing 21. In another aspect, the collisions between the first main body 221 and the second main body 231 during use can be reduced. In addition, the clearance groove 291 configured to accommodate the first connection regions 2441 of the two films 244 is provided on the side, facing the first main body 221, of the mounting frame 29, such that the clearance groove 291 of the mounting frame 29 can provide clearance for the first connection regions 2441 of the two films 244, which is conducive to reducing the interference between the mounting frame 29 and the first connection regions 2441 of the films 244 and can improve the internal space utilization rate of the battery cell 20.

In some embodiments, the accommodating member 24 is made of an insulating material.

Illustratively, the accommodating member 24 may be made of rubber, silicone, plastic, or the like.

The accommodating member 24 is configured to be made of an insulating material, such that the first electrode assembly 22 accommodated in the accommodating cavity 241 of the accommodating member 24 can also be insulated and isolated from the housing 21 or other components by means of the accommodating member 24, which is conducive to reducing the risk of short circuit between the first electrode assembly 22 and the housing 21 or other components.

According to some embodiments of the present application, referring to FIG. 4, the first electrode assembly 22 and the second electrode assembly 23 are both wound structures formed by winding around the axis extending in the thickness direction X of the first wall.

The first electrode assembly 22 and the second electrode assembly 23 are both wound structures formed by winding around the axis extending in the thickness direction X of the first wall; that is, the first electrode assembly 22 and the second electrode assembly 23 are both wound-type structures formed by winding a positive electrode plate, a separator, and a negative electrode plate, and a winding central axis of the first electrode assembly 22 and a winding central axis of the second electrode assembly 23 both extend in the thickness direction X of the first wall. That is, the axial direction of the first electrode assembly 22 and the axial direction of the second electrode assembly 23 are both consistent with the thickness direction X of the first wall. Therefore, the first electrode assembly 22 and the second electrode assembly 23 are structures disposed in an overlapping manner in the axial direction of the first electrode assembly 22 or the axial direction of the second electrode assembly 23.

The first electrode assembly 22 and the second electrode assembly 23 are both configured as wound-type structures formed by winding around the axis extending in the thickness direction X of the first wall, such that the first electrode assembly 22 and the second electrode assembly 23 are structures arranged in the housing 21 in the axial directions of the first electrode assembly and the second electrode assembly. The battery cell 20 adopting such a structure is capable of optimizing the dimension of a single electrode assembly accommodated in the housing 21 in the thickness direction X of the first wall while realizing the increase in the length dimension of the battery cell 20 in the thickness direction X of the first wall, without the need to enlarge the winding dimension of the first electrode assembly 22 or the second electrode assembly 23 in the thickness direction X of the first wall, thereby effectively reducing the winding difficulty of the first electrode assembly 22 and the second electrode assembly 23 and reducing the assembly difficulty of the battery cell 20. This, in turn, is conducive to reducing the manufacturing cost of the battery cell 20 and improving the production efficiency of the battery cell 20.

According to some embodiments of the present application, referring to FIG. 3, a length direction of the housing 21 is consistent with the thickness direction X of the first wall, and the length of the housing 21 is L, satisfying L ≥ 200 mm.

The thickness direction X of the first wall is the length direction of the housing 21, and is also the height direction of the battery cell 20.

The length of the housing 21 is configured to be greater than or equal to 200 mm to increase the length dimension of the battery cell 20 in the thickness direction X of the first wall, and the first electrode assembly 22 and the second electrode assembly 23 in the housing 21 are configured as structures arranged in the thickness direction X of the first wall while a relatively large length dimension of the battery cell 20 is realized, such that the dimension of a single electrode assembly accommodated in the housing 21 in the thickness direction X of the first wall can be optimized while realizing that the length of the housing 21 of the battery cell 20 in the thickness direction X of the first wall is greater than or equal to 200 mm, without the need to enlarge the winding dimension of the first electrode assembly 22 or the second electrode assembly 23 in the thickness direction X of the first wall, thereby reducing the winding difficulty of the first electrode assembly 22 and the second electrode assembly 23 and reducing the assembly difficulty of the battery cell 20. This, in turn, is conducive to reducing the manufacturing cost of the battery cell 20 and improving the production efficiency of the battery cell 20.

In some embodiments, with further reference to FIG. 3, the length direction of the housing 21 is consistent with the thickness direction X of the first wall, and the length of the housing 21 is L, satisfying L ≥ 250 mm.

The length of the housing 21 is further configured to be greater than or equal to 250 mm to further increase the length dimension of the battery cell 20 in the thickness direction X of the first wall, such that the dimension of a single electrode assembly accommodated in the housing 21 in the thickness direction X of the first wall can be optimized while realizing that the length of the housing 21 of the battery cell 20 in the thickness direction X of the first wall is greater than or equal to 250 mm, without the need to enlarge the winding dimension of the first electrode assembly 22 or the second electrode assembly 23 in the thickness direction X of the first wall, thereby reducing the winding difficulty of the first electrode assembly 22 and the second electrode assembly 23 and reducing the assembly difficulty of the battery cell 20. This, in turn, is conducive to reducing the manufacturing cost of the battery cell 20 and improving the production efficiency of the battery cell 20.

According to some embodiments of the present application, the first electrode assembly 22 is electrically connected to the second electrode assembly 23. That is, the first electrode assembly 22 and the second electrode assembly 23 are in electrical conduction with each other. Optionally, the first electrode assembly 22 and the second electrode assembly 23 may be connected in parallel or in series.

The first electrode assembly 22 and the second electrode assembly 23 are configured as structures that are electrically connected to each other, to achieve a structure in which the first electrode assembly 22 and the second electrode assembly 23 are connected in parallel or in series inside the housing 21, such that only two electrode output ends need to be provided on the housing 21 to realize the input or output of the positive electrode and the negative electrode of the battery cell 20. As a result, this can reduce the production cost of the battery cell 20 and can optimize the takt time of the battery cell 20, thereby improving the production efficiency of the battery cell 20.

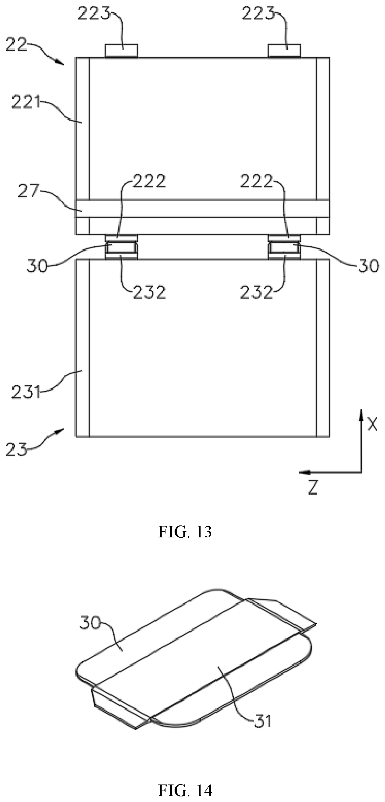

In some embodiments, referring to FIGs. 5 and 6, and further referring to FIG. 13, FIG. 13 is a schematic diagram of a connection between a first electrode assembly 22 and a second electrode assembly 23 of a battery cell 20 according to some embodiments of the present application. The first electrode assembly 22 includes a first main body 221 and a first tab 222, the second electrode assembly 23 includes a second main body 231 and a second tab 232, and the second main body 231 and the first main body 221 are arranged in the thickness direction X of the first wall. In the thickness direction X of the first wall, the first tab 222 is disposed at an end, facing the second main body 231, of the first main body 221, and the second tab 232 is disposed at an end, facing the first main body 221, of the second main body 231. The second tab 232 is connected to the first tab 222 to electrically connect the first electrode assembly 22 and the second electrode assembly 23.

Each first electrode assembly 22 is provided with two first tabs 222, the two first tabs 222 are both connected to an end, facing the second electrode assembly 23, of the first main body 221 in the thickness direction X of the first wall, and the two first tabs 222 have different polarities. Each second electrode assembly 23 is provided with two second tabs 232, the two second tabs 232 are both connected to an end, facing the first electrode assembly 22, of the second main body 231 in the thickness direction X of the first wall, and the two second tabs 232 have different polarities.

For the two first tabs 222 of the first electrode assembly 22 and the two second tabs 232 of the second electrode assembly 23, the first tab 222 and the second tab 232 having the same polarity may be correspondingly connected, to achieve a parallel connection between the first electrode assembly 22 and the second electrode assembly 23, or the first tab 222 and the second tab 232 having opposite polarities may be correspondingly connected, to achieve a series connection between the first electrode assembly 22 and the second electrode assembly 23.

The first main body 221 of the first electrode assembly 22 and the second main body 231 of the second electrode assembly 23 are arranged in the first direction Y, the first tab 222 of the first electrode assembly 22 is disposed at the end, facing the second main body 231, of the first main body 221, and correspondingly, the second tab 232 of the second electrode assembly 23 is disposed at the end, facing the first main body 221, of the second main body 231, such that connecting the first tab 222 and the second tab 232 can achieve an electrical connection between the first electrode assembly 22 and the second electrode assembly 23. The battery cell 20 adopting such a structure facilitates the electrical connection between the first electrode assembly 22 and the second electrode assembly 23, and is conducive to reducing the difficulty of the electrical connection between the first electrode assembly 22 and the second electrode assembly 23, thereby improving the assembly efficiency of the battery cell 20.

According to some embodiments of the present application, referring to FIGs. 4 and 13, the battery cell 20 may further include an adapter member 30. The adapter member 30 connects the first tab 222 and the second tab 232, the first tab 222 is located within the accommodating cavity 241, the second tab 232 is located outside the accommodating member 24, and a channel for the adapter member 30 to pass through is provided at an end, close to the second main body 231, of the accommodating member 24 in the thickness direction X of the first wall.

The first tab 222 is located within the accommodating cavity 241, and the second tab 232 is located outside the accommodating member 24; that is, the first tab 222 and the second tab 232 are located on the inner side and the outer side of the accommodating member 24, respectively.

The channel for the adapter member 30 to pass through is provided at the end, close to the second main body 231, of the accommodating member 24 in the thickness direction X of the first wall; that is, the adapter member 30 passes through the end, close to the second main body 231, of the accommodating member 24 in the thickness direction X of the first wall from the accommodating cavity 241 of the accommodating member 24. That is, after the adapter member 30 passes through the channel of the accommodating member 24, a portion of the adapter member 30 is located on the inner side of the accommodating member 24, enabling the adapter member 30 to be connected to the first tab 222, and a portion of the adapter member 30 is located on the outer side of the accommodating member 24, enabling the adapter member 30 to be connected to the second tab 232.

In FIG. 4, each first electrode assembly 22 is provided with two first tabs 222, each second electrode assembly 23 is provided with two second tabs 232, and each first tab 222 is connected to one second tab 232. Correspondingly, the battery cell 20 includes two adapter members 30, and each adapter member 30 connects one first tab 222 and one second tab 232.

The adapter member 30 is further provided in the housing 21 of the battery cell 20. The adapter member 30 passes through the channel at the end, close to the second main body 231 part, of the accommodating member 24 in the thickness direction X of the first wall, such that the adapter member 30 can connect the first tab 222 of the first electrode assembly 22 located inside the accommodating member 24 and the second tab 232 of the second electrode assembly 23 located outside the accommodating member 24 to achieve the connection between the first tab 222 and the second tab 232. The battery cell 20 adopting such a structure does not need to configure the first tab 222 of the first electrode assembly 22 as a structure that passes through the accommodating member 24, and does not need to configure the second tab 232 of the second electrode assembly 23 as a structure that is inserted into the accommodating cavity 241 of the accommodating member 24. Therefore, configuring the adapter member 30 as a structure that connects the first tab 222 and the second tab 232 after passing through the accommodating member 24 can reduce the difficulty of the connection between the first tab 222 and the second tab 232, and the adapter member 30 can more easily pass through the channel of the accommodating member 24 than the first tab 222, thereby helping to reduce the assembly difficulty of the battery cell 20.

According to some embodiments of the present application, referring to FIGs. 4 and 13, and further referring to FIG. 14, FIG. 14 is a schematic diagram of a connection between an adapter member 30 and a sealing member 31 of a battery cell 20 according to some embodiments of the present application. The battery cell 20 may further include a sealing member 31. The sealing member 31 is disposed between the adapter member 30 and the accommodating member 24, and the sealing member 31 is configured to seal a gap between the adapter member 30 and the accommodating member 24.

The sealing member 31 is disposed between the adapter member 30 and the accommodating member 24; that is, the sealing member 31 is disposed between an outer peripheral surface of the adapter member 30 and an inner wall surface of the channel of the accommodating member 24, such that the sealing member 31 can seal a gap between the adapter member 30 and the inner wall surface of the channel of the accommodating member 24.

Optionally, the sealing member 31 may be of various structures, and the sealing member 31 may be double-sided adhesive tape, hot-melt adhesive, sealant, or the like disposed between the adapter member 30 and the accommodating member 24.

The sealing member 31 is disposed between the adapter member 30 and the accommodating member 24, such that the sealing member 31 can seal the gap between the adapter member 30 and the accommodating member 24, thereby improving the sealing performance between the adapter member 30 and the accommodating member 24 after the adapter member 30 passes through the accommodating member 24, reducing the risk of leakage of the electrolytic solution from the channel of the accommodating member 24, and thus enabling the accommodating cavity 241 of the accommodating member 24 to have sufficient electrolytic solution to wet the first electrode assembly 22.

In some embodiments, referring to FIGs. 7 and 8, the accommodating member 24 may include two films 244. The two films 244 are arranged in the first direction Y, and the two films 244 jointly define, in an enclosing manner, the accommodating cavity 241. An end, close to the first wall 211, of each film 244 in the thickness direction X of the first wall forms a first connection region 2441, the first connection regions 2441 of the two films 244 are stacked and connected to each other, and the channel is formed between the first connection regions 2441 of the two films 244.

The first connection regions 2441 of the two films 244 are stacked and connected to each other, and the channel is formed between the first connection regions 2441 of the two films 244; that is, regions of the first connection regions 2441 of the two films 244 that are not connected to each other jointly define, in an enclosing manner, the channel for the adapter member 30 to pass through, such that the adapter member 30 passes through the regions of the first connection regions 2441 of the two films 244 that are not connected to each other. That is, the adapter member 30 is clamped between the first connection regions 2441 of the two films 244, and the regions of the first connection regions 2441 of the two films 244 where the adapter member 30 is not clamped are connected to each other.

It should be noted that in the embodiments where the sealing member 31 is provided between the adapter member 30 and the accommodating member 24, the sealing member 31 is disposed between the adapter member 30 and the first connection region 2441.

It should be noted that in the structure where the accommodating member 24 is integrally formed, the channel is a hole passage provided at the end, close to the second electrode assembly 23, of the accommodating member 24 in the thickness direction X of the first wall, and the hole passage is in communication with the accommodating cavity 241, such that the adapter member 30 can pass through the outer side of the accommodating member 24 from the accommodating cavity 241 of the accommodating member 24.

The accommodating member 24 is provided with the two films 244 arranged in the first direction Y, and the channel for the adapter member 30 to pass through is formed by the first connection regions 2441 of the two films 244 stacked together and jointly enclosing the channel, such that the adapter member 30 is a structure clamped by the first connection regions 2441 of the two first films 244 to allow the adapter member 30 to pass through the first connection regions 2441 of the two films 244. Therefore, there is no need to separately provide a channel on the accommodating member 24 for the adapter member 30 to pass through, which is conducive to reducing the manufacturing difficulty of the accommodating member 24. In addition, after the adapter member 30 passes through the channel, the first connection regions 2441 of the two films 244 and the adapter member 30 can be conveniently stacked and then connected into a whole, which is conducive to improving the stability of the adapter member 30 passing through the channel.

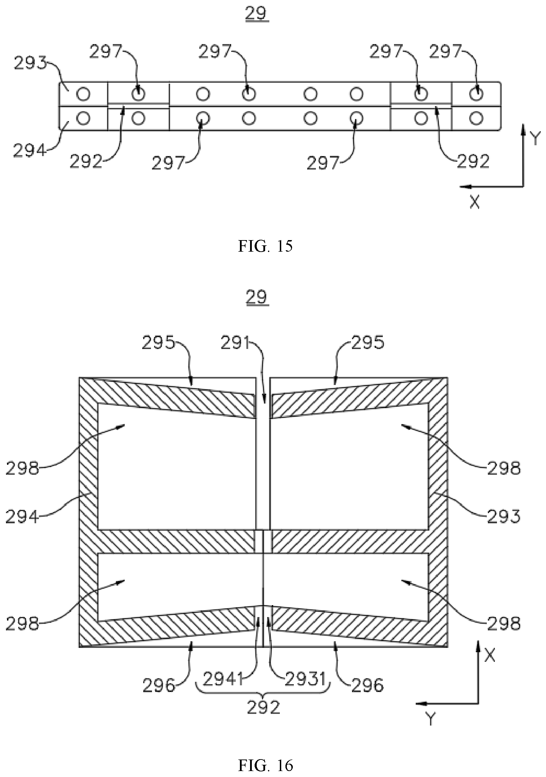

According to some embodiments of the present application, referring to FIGs. 4, 10, and 11, and further referring to FIG. 15, FIG. 15 is a bottom view of a mounting frame 29 of a battery cell 20 according to some embodiments of the present application. The battery cell 20 may further include a mounting frame 29, and the mounting frame 29 is accommodated in the housing 21 and located on the outer side of the accommodating member 24. In the thickness direction X of the first wall, the mounting frame 29 is disposed between the first main body 221 and the second main body 231, and the mounting frame 29 is configured to separate the first main body 221 from the second main body 231. The mounting frame 29 is provided with a clearance hole 292, the clearance hole 292 extends through the mounting frame 29 in the thickness direction X of the first wall, and the adapter member 30 and the second tab 232 are both inserted into the clearance hole 292.

The clearance hole 292 extends through the mounting frame 29 in the thickness direction X of the first wall; that is, a mounting hole is a structure extending in the thickness direction X of the first wall, and the mounting hole extends through surfaces on two sides of the mounting frame 29 in the thickness direction X of the first wall.

The adapter member 30 and the second tab 232 are both inserted into the clearance hole 292; that is, at least a portion of the adapter member 30 and at least a portion of the second tab 232 are accommodated in the clearance hole 292, such that the connection position of the adapter member 30 and the second tab 232 is accommodated in the clearance hole 292. That is, the adapter member 30 and the second tab 232 can be assembled with and connected to each other in the clearance hole 292.

It should be noted that in other embodiments, the mounting frame 29 may not be provided with the clearance hole 292, and the second tab 232 only needs to bypass the mounting frame 29 and then be connected to the adapter member 30.

The mounting frame 29 is disposed between the first main body 221 and the second main body 231 that are arranged in the thickness direction X of the first wall, such that the mounting frame 29 can separate the first main body 221 from the second main body 231. In one aspect, the mounting frame 29 can serve to stably assemble the first main body 221 and the second main body 231, which is conducive to reducing the stability of the first electrode assembly 22 and the second electrode assembly 23 assembled into the housing 21. In another aspect, the collisions between the first main body 221 and the second main body 231 during use can be reduced. In addition, the clearance hole 292 that extends through the two sides of the mounting frame 29 in the thickness direction X of the first wall is provided on the mounting frame 29, and the adapter member 30 and the second tab 232 are both inserted into the clearance hole 292, such that the battery cell 20 adopting such a structure, in one aspect, can reduce the connection difficulty of the adapter member 30 and the second tab 232, which is conducive to reducing the blocking of the adapter member 30 by the mounting frame 29, and in another aspect, can also play a certain stabilizing and protecting role for the adapter member 30 and the second tab 232 by means of the mounting frame 29, which is conducive to reducing the wobbling of, or damage to the adapter member 30 and the second tab 232 during use, thereby improving the use stability and service life of the battery cell 20.

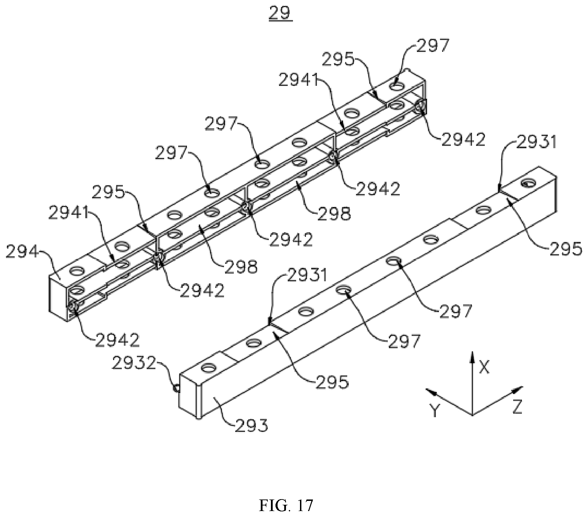

According to some embodiments of the present application, referring to FIGs. 11 and 15, and further referring to FIGs. 16 and 17, FIG. 16 is a cross-sectional view of a mounting frame 29 of a battery cell 20 according to some embodiments of the present application, and

FIG. 17 is an exploded view of a structure of a mounting frame 29 of a battery cell 20 according to some embodiments of the present application. The mounting frame 29 may include a first frame body 293 and a second frame body 294 detachably connected to each other. The first frame body 293 and the second frame body 294 are arranged in the first direction Y, and the first frame body 293 and the second frame body 294 jointly define, in an enclosing manner, the clearance hole 292. The first direction Y is perpendicular to the thickness direction X of the first wall.

The mounting frame 29 may include the first frame body 293 and the second frame body 294 detachably connected to each other; that is, the mounting frame 29 is composed of the separately provided first frame body 293 and second frame body 294 detachably connected to each other. The connecting structure between the first frame body 293 and the second frame body 294 may be of various types. For example, the first frame body 293 and the second frame body 294 may be connected to each other by means of a detachable connection, such as a snap-fit connection or a bolted connection.

The first frame body 293 and the second frame body 294 jointly define, in an enclosing manner, the clearance hole 292; that is, the clearance hole 292 is formed on a contact surface where the first frame body 293 and the second frame body 294 abut against each other, such that the clearance hole 292 is located between the first frame body 293 and the second frame body 294. That is, the first frame body 293 and the second frame body 294, after being connected to each other in the first direction Y, are jointly joined to form the clearance hole 292, thereby facilitating the accommodation of the adapter member 30 and the second tab 232 in the clearance hole 292 after the adapter member and the second tab are connected to each other.

The mounting frame 29 is provided with the first frame body 293 and the second frame body 294 that are arranged in the first direction Y. The first frame body 293 and the second frame body 294 are configured as a detachably connected structure, and the first frame body 293 and the second frame body 294 jointly define, in an enclosing manner, the clearance hole 292 configured to allow the adapter member 30 and the second tab 232 to be inserted thereinto, such that the mounting frame 29 adopting such a structure, in one aspect, facilitates the assembly of the adapter member 30 and the second tab 232 into the clearance hole 292 after the adapter member 30 and the second tab 232 are connected to each other, which is conducive to reducing the difficulty of assembling the adapter member 30 and the second tab 232 into the clearance hole 292, and in another aspect, facilitates the assembly of the mounting frame 29 between the first main body 221 and the second main body 231, and facilitates the maintenance of the adapter member 30 and the second tab 232 after quickly disassembling and assembling the first frame body 293 and the second frame body 294 at a later stage.

In some embodiments, referring to FIGs. 11, 16, and 17, a first groove 2931 is provided on a side, facing the second frame body 294, of the first frame body 293, and the first groove 2931 extends through the first frame body 293 in the thickness direction X of the first wall. A second groove 2941 is provided on a side, facing the first frame body 293, of the second frame body 294, and the second groove 2941 extends through the second frame body 294 in the thickness direction X of the first wall. The second groove 2941 and the first groove 2931 define, in an enclosing manner, the clearance hole 292.

The first groove 2931 extends through the first frame body 293 in the thickness direction X of the first wall; that is, two ends of the first groove 2931 in the thickness direction X of the first wall extend to two sides of the first frame body 293 in the thickness direction X of the first wall, respectively. Similarly, the second groove 2941 extends through the second frame body 294 in the thickness direction X of the first wall; that is, two ends of the second groove 2941 in the thickness direction X of the first wall extend to two sides of the second frame body 294 in the thickness direction X of the first wall, respectively.

The second groove 2941 and the first groove 2931 define, in an enclosing manner, the clearance hole 292; that is, the first groove 2931 and the second groove are disposed opposite to and facing each other in the first direction Y, such that after the first frame body 293 and the second frame body 294 are connected to each other, the first groove 2931 and the second groove 2941 define, in an enclosing manner, the clearance hole 292 extending through the two sides of the mounting frame 29 in the thickness direction X of the first wall.

It should be noted that in other embodiments, the mounting frame 29 may also be of other structures. For example, the first groove 2931 is provided on a side, facing the second frame body 294, of the first frame body 293 in the first direction Y, the second frame body 294 is not provided with the second groove 2941, and the first groove 2931 and a surface, facing the first frame body 293, of the second frame body 294 jointly define, in an enclosing manner, the clearance hole 292. For another example, the second groove 2941 is provided on a side, facing the first frame body 293, of the second frame body 294 in the first direction Y, the first frame body 293 is not provided with the first groove 2931, and the second groove 2941 and a surface, facing the second frame body 294, of the first frame body 293 jointly define, in an enclosing manner, the clearance hole 292.

The first groove 2931 is provided on the side, facing the second frame body 294, of the first frame body 293, and the second groove 2941 is provided on the side, facing the first frame body 293, of the second frame body 294, such that after the first frame body 293 and the second frame body 294 are assembled with each other in the first direction Y, the first groove 2931 and the second groove 2941 can jointly define, in an enclosing manner, the clearance hole 292 configured to accommodate the adapter member 30 and the second tab 232. The structure is simple and easy to implement.

According to some embodiments of the present application, referring to FIG. 17, a snap-fit part 2932 is provided on a side, facing the second frame body 294, of the first frame body 293, and a snap-fit hole 2942 is provided on a side, facing the first frame body 293, of the second frame body 294; the snap-fit hole 2942 is configured to allow the snap-fit part 2932 to be snap-fitted thereinto.

The snap-fit hole 2942 is configured to allow the snap-fit part 2932 to be snap-fitted thereinto; that is, the snap-fit part 2932 of the first frame body 293 is configured to be in snap fit with the snap-fit hole 2942 of the second frame body 294 to achieve a detachable connection between the first frame body 293 and the second frame body 294. Certainly, in other embodiments, the first frame body 293 and the second frame body 294 may also be detachably connected by means of a structure such as a screw connection screw connection.

Optionally, one or a plurality of snap-fit parts 2932 disposed on the first frame body 293 and one or a plurality of snap-fit holes 2942 disposed on the second frame body 294 may be provided. Illustratively, in the first direction Y, five snap-fit parts 2932 are provided on the side, facing the second frame body 294, of the first frame body 293, and the five snap-fit parts 2932 are spaced apart from each other in the second direction Z. The second direction Z is a length direction of the mounting frame 29, and every two of the thickness direction X of the first wall, the first direction Y, and the second direction Z are perpendicular to each other. Five snap-fit holes 2942 are provided on the side, facing the first frame body 293, of the second frame body 294. The snap-fit holes 2942 are arranged in a one-to-one correspondence with the snap-fit parts 2932, and each snap-fit hole 2942 is configured to allow one snap-fit part 2932 to be snap-fitted thereinto. Certainly, in other embodiments, the number of the snap-fit parts 2932 disposed on the first frame body 293 and the number of the snap-fit holes 2942 disposed on the second frame body 294 may also be two, three, four, six, or the like.

It should be noted that in some embodiments, the snap-fit part 2932 may also be disposed on the side, facing the first frame body 293, of the second frame body 294, and correspondingly, the snap-fit hole 2942 is disposed on the side, facing the second frame body 294, of the first frame body 293.

The snap-fit part 2932 is provided on the side, facing the second frame body 294, of the first frame body 293, and correspondingly, the snap-fit hole 2942 configured to allow the snap-fit part 2932 to be snap-fitted thereinto is provided on the side, facing the first frame body 293, of the second frame body 294, such that the detachable connection between the first frame body 293 and the second frame body 294 is achieved through the snap fit between the snap-fit part 2932 and the snap-fit hole 2942. The structure is simple and easy to assemble.

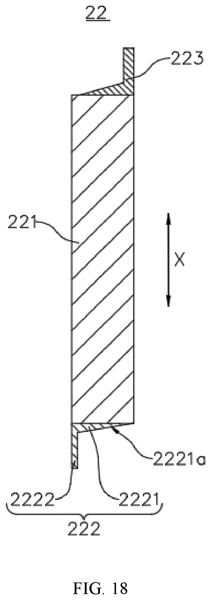

According to some embodiments of the present application, referring to FIGs. 11 and 16, and further referring to FIG. 18, FIG. 18 is a cross-sectional view of a first electrode assembly 22 of a battery cell 20 according to some embodiments of the present application. The first tab 222 includes a first root part 2221 and a first tab part 2222. The first root part 2221 connects the first tab part 2222 and the first main body 221, and the first tab part 2222 is connected to the adapter member 30. In the thickness direction X of the first wall, a first accommodating groove 295 is provided on a side, facing the first main body 221, of the mounting frame 29. The first accommodating groove 295 is configured to accommodate the first root part 2221, and the clearance hole 292 extends through a groove bottom surface of the first accommodating groove 295.

The first root part 2221 of the first tab 222 is a flattened region of the first tab 222, and the first tab part 2222 of the first tab 222 is a region of the first tab 222, configured to be connected to the adapter member 30. The first root part 2221 is connected to an end, facing the second main body 231, of the first main body 221, and the first tab part 2222 is connected to a side, away from the first main body 221, of the first root part 2221.

The first accommodating groove 295 is provided on the side, facing the first main body 221, of the mounting frame 29; that is, the first accommodating groove 295 is disposed on a surface, facing the first main body 221, of the mounting frame 29 in the thickness direction X of the first wall, such that the first root part 2221 can be indirectly accommodated in the first accommodating groove 295 by means of the accommodating member 24. That is, the first root part 2221 causes protrusion of a local region of the accommodating member 24, and the protruded region of the accommodating member 24 and the first root part 2221 can be both inserted into the first accommodating groove 295, enabling the mounting frame 29 to share a portion of the space with the first root part 2221 in the thickness direction X of the first wall, thereby helping to improve the internal space utilization rate of the battery cell 20.

The clearance hole 292 extends through the groove bottom surface of the first accommodating groove 295; that is, an end, close to the first main body 221, of the clearance hole 292 in the thickness direction X of the first wall extends to the groove bottom surface of the first accommodating groove 295.

It should be noted that in the embodiments where the mounting frame 29 includes the first frame body 293 and the second frame body 294, referring to FIGs. 11 and 16, a portion of the first accommodating groove 295 is disposed on a surface, facing the first main body 221, of the first frame body 293, and the other portion of the first accommodating groove is disposed on a surface, facing the first main body 221, of the second frame body 294.

The first accommodating groove 295 configured to accommodate the first root part 2221 of the first tab 222 is provided on the side, facing the first main body 221, of the mounting frame 29, and the clearance hole 292 is a structure that extends through the groove bottom surface of the first accommodating groove 295. Therefore, in one aspect, the mounting frame 29 can provide clearance for the first root part 2221 of the first tab 222 after the first root part 2221 of the first tab 222 causes local protrusion of the accommodating member 24, thereby reducing the occurrence of the mounting frame 29 pressing against and damaging the first tab 222, and in another aspect, this facilitates the insertion of the adapter member 30 into the clearance hole 292 to assemble and connect with the second tab 232 after the adapter member and the first tab part 2222 are connected to each other and pass through the channel of the accommodating member 24.

In some embodiments, referring to FIGs. 16 and 18, in the thickness direction X of the first wall, the first root part 2221 is provided with a first surface 2221a facing away from the first main body 221, the first tab part 2222 protrudes from the first surface 2221a, and the first surface 2221a fits with the groove bottom surface of the first accommodating groove 295.

The first tab part 2222 protrudes from the first surface 2221a; that is, the first tab part 2222 is connected to the first surface 2221a of the first root part 2221 and protrudes from the first surface 2221a, enabling the first tab part 2222 to be connected to the adapter member 30.

The first surface 2221a fits with the groove bottom surface of the first accommodating groove 295; that is, the first surface 2221a of the first root part 2221 can indirectly abut against a portion of the groove bottom surface of the first accommodating groove 295 by means of the accommodating member 24.

The first surface 2221a, facing the groove bottom surface of the first accommodating groove 295, of the first root part 2221 is configured as a structure that fits with the groove bottom surface of the first accommodating groove 295, enabling the groove bottom surface of the first accommodating groove 295 to indirectly fit closely to the first surface 2221a of the first root part 2221 by means of the accommodating member 24, such that the groove bottom surface of the first accommodating groove 295 can also play a certain shaping and gathering role for the first root part 2221 of the first tab 222, thereby helping to maintain the shape of the first root part 2221 of the first tab 222.

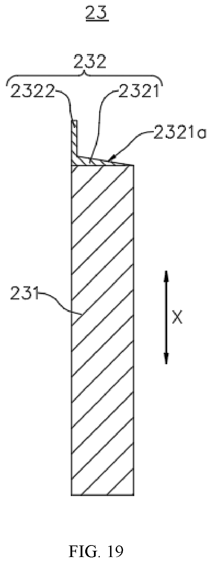

According to some embodiments of the present application, referring to FIG. 16, and further referring to FIG. 19, FIG. 19 is a cross-sectional view of a second electrode assembly 23 of a battery cell 20 according to some embodiments of the present application. The second tab 232 includes a second root part 2321 and a second tab part 2322. The second root part 2321 connects the second tab part 2322 and the second main body 231. The second tab part 2322 is inserted into the clearance hole 292, and the second tab part 2322 is connected to the adapter member 30. In the thickness direction X of the first wall, a second accommodating groove 296 is provided on a side, facing the second main body 231, of the mounting frame 29. The second accommodating groove 296 is configured to accommodate the second root part 2321, and the clearance hole 292 extends through a groove bottom surface of the second accommodating groove 296.

The second root part 2321 of the second tab 232 is a flattened region of the second tab 232, and the second tab part 2322 of the second tab 232 is a region of the second tab 232, configured to be connected to the adapter member 30. The second root part 2321 is connected to an end, facing the first main body 221, of the second main body 231, and the second tab part 2322 is connected to a side, away from the second main body 231, of the second root part 2321.

The second accommodating groove 296 is provided on the side, facing the second main body 231, of the mounting frame 29; that is, the second accommodating groove 296 is disposed on a surface, facing the second main body 231, of the mounting frame 29 in the thickness direction X of the first wall, such that the second root part 2321 can be accommodated in the second accommodating groove 296 to enable the mounting frame 29 to share a portion of the space with the second root part 2321 in the thickness direction X of the first wall, thereby helping to improve the internal space utilization rate of the battery cell 20.

The clearance hole 292 extends through the groove bottom surface of the second accommodating groove 296; that is, an end, close to the second main body 231, of the clearance hole 292 in the thickness direction X of the first wall extends to the groove bottom surface of the second accommodating groove 296.

It should be noted that in the embodiments where the mounting frame 29 includes the first frame body 293 and the second frame body 294, referring to FIG. 16, a portion of the second accommodating groove 296 is disposed on a surface, facing the second main body 231, of the first frame body 293, and the other portion of the second accommodating groove is disposed on a surface, facing the second main body 231, of the second frame body 294.

The second accommodating groove 296 configured to accommodate the second root part 2321 of the second tab 232 is provided on the side, facing the second main body 231, of the mounting frame 29, and the clearance hole 292 is a structure that extends through the groove bottom surface of the second accommodating groove 296, such that in one aspect, the mounting frame 29 can provide clearance for the second root part 2321 of the second tab 232 to reduce the occurrence of the mounting frame 29 pressing against and damaging the second tab 232, and in another aspect, the insertion of the second tab part 2322 of the second tab 232 into the clearance hole 292 to assemble and connect with the adapter member 30 is facilitated.

In some embodiments, referring to FIGs. 16 and 19, in the thickness direction X of the first wall, the second root part 2321 is provided with a second surface 2321a facing away from the second main body 231, the second tab part 2322 protrudes from the second surface 2321a, and the second surface 2321a fits with the groove bottom surface of the second accommodating groove 296.

The second tab part 2322 protrudes from the second surface 2321a; that is, the second tab part 2322 is connected to the second surface 2321a of the second root part 2321 and protrudes from the second surface 2321a, enabling the second tab part 2322 to be connected to the adapter member 30.

The second surface 2321a fits with the groove bottom surface of the second accommodating groove 296; that is, the second surface 2321a of the second root part 2321 can abut against a portion of the groove bottom surface of the second accommodating groove 296.

The second surface 2321a, facing the groove bottom surface of the second accommodating groove 296, of the second root part 2321 is configured as a structure that fits with the groove bottom surface of the second accommodating groove 296, enabling the groove bottom surface of the second accommodating groove 296 to fit closely to the second surface 2321a of the second root part 2321, such that the groove bottom surface of the second accommodating groove 296 can also play a certain shaping and gathering role for the second root part 2321 of the second tab 232, thereby helping to maintain the shape of the second root part 2321 of the second tab 232.

According to some embodiments of the present application, referring to FIGs. 11 and 15, the mounting frame 29 is provided with a second through hole 297, the second through hole 297 extends through the mounting frame 29 in the thickness direction X of the first wall, and the second through hole 297 is configured to allow the electrolytic solution to pass through.

The second through hole 297 extends through the mounting frame 29 in the thickness direction X of the first wall; that is, the second through hole 297 is a structure extending in the thickness direction X of the first wall, and two ends of the second through hole 297 extend through surfaces on two sides of the mounting hole in the thickness direction X of the first wall, respectively.

The second through hole 297 that extends through the two sides of the mounting frame 29 in the thickness direction X of the first wall is provided on the mounting frame 29, such that the electrolytic solution is allowed to flow between the first electrode assembly 22 and the second electrode assembly 23 through the second through hole 297. This, in one aspect, is conducive to improving the fluidity of the electrolytic solution between the first electrode assembly 22 and the second electrode assembly 23 to improve the wetting performance of the first electrode assembly 22 and the second electrode assembly 23, and in another aspect, facilitates the flow of a gas, generated between the first electrode assembly 22 and the second electrode assembly 23, from the second through hole 297.

In some embodiments, referring to FIGs. 11, 15, and 17, a plurality of second through holes 297 are provided on the mounting frame 29.

Illustratively, in the embodiments where the mounting frame 29 includes the first frame body 293 and the second frame body 294, a plurality of second through holes 297 are provided on the first frame body 293, and the plurality of second through holes 297 are spaced apart from each other in the second direction Z. Correspondingly, a plurality of second through holes 297 are also provided on the second frame body 294, and the plurality of second through holes 297 are spaced apart from each other in the second direction Z. That is, in FIG. 15, two rows of second through holes 297 arranged in the first direction Y are provided on the mounting frame 29, and each row of second through holes 297 includes a plurality of second through holes 297 spaced apart from each other in the second direction Z. Certainly, in other embodiments, the mounting frame 29 may also be provided with one row, three rows, or four rows of second through holes 297 arranged in the first direction Y, or the like.

Providing the plurality of second through holes 297 on the mounting frame 29 is conducive to further improving the fluidity of the electrolytic solution between the first electrode assembly 22 and the second electrode assembly 23 to further improve the wetting performance of the first electrode assembly 22 and the second electrode assembly 23, and can further improve the flow effect of the gas generated between the first electrode assembly 22 and the second electrode assembly 23.

In some embodiments, referring to FIGs. 16 and 17, a cavity 298 is formed inside the mounting frame 29, and the cavity 298 is in communication with the second through hole 297.

The cavity 298 is in communication with the second through hole 297; that is, the second through hole 297 is a structure extending in the thickness direction X of the first wall, and the second through hole 297 extends through a cavity wall surface of the cavity 298, such that at least a portion of the projection of the second through hole 297 in the thickness direction X of the first wall is located within the cavity 298.

It should be noted that in the embodiments where the mounting frame 29 includes the first frame body 293 and the second frame body 294, in FIGs. 16 and 17, a portion of the cavity 298 is located inside the first frame body 293, and the other portion is located inside the second frame body 294. That is, the cavity 298 extends through a side, facing the second frame body 294, of the first frame body 293 and a side, facing the first frame body 293, of the second frame body 294, such that the first frame body 293 and the second frame body 294 jointly define, in an enclosing manner, the cavity 298. Illustratively, two cavities 298 are formed inside the mounting frame 29. The two cavities 298 are spaced apart from each other in the thickness direction X of the first wall, and the second through hole 297 sequentially extends through the two cavities 298 in the thickness direction X of the first wall.

The cavity 298 is provided inside the mounting frame 29, and the cavity 298 is in communication with the second through hole 297; that is, the second through hole 297 is a structure extending through the inner wall surface of the cavity 298. Therefore, the mounting frame 29 adopting such a structure, in one aspect, can reduce the weight of the mounting frame 29 by providing the cavity 298 to reduce the overall weight of the battery cell 20, thereby helping to improve the energy density of the battery cell 20, and in another aspect, enables the cavity 298 to also play a certain buffering role for the electrolytic solution, thereby helping to further improve the wetting performance of the first electrode assembly 22 and the second electrode assembly 23.

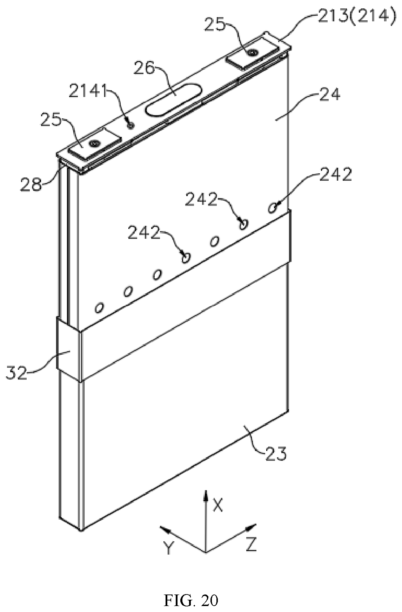

According to some embodiments of the present application, referring to FIGs. 4 and 10, and further referring to FIG. 20, FIG. 20 is a schematic diagram of an assembly of a first electrode assembly 22 and a second electrode assembly 23 with a connecting member 32 according to some embodiments of the present application. The battery cell 20 may further include a connecting member 32. The connecting member 32 connects the mounting frame 29, the accommodating member 24, and the second main body 231.

The connecting member 32 is located on an outer side of the mounting frame 29, and the connecting member 32 serves to connect the mounting frame 29, the accommodating member 24, and the second main body 231. Optionally, the connecting member 32 may be connected to the mounting frame 29, the accommodating member 24, and the second main body 231 by various structures, such as adhesive bonding or hot-melting connection.

The battery cell 20 is further provided with the connecting member 32 connecting the mounting frame 29, the accommodating member 24, and the second main body 231, such that the mounting frame 29, the second main body 231, and the accommodating member 24 wrapping around an outer side of the first electrode assembly 22 can be connected into a whole via the connecting member 32. This is conducive to improving the structural stability of the mounting frame 29 disposed between the first main body 221 and the second main body 231, thereby reducing the risks such as wobbling or detachment of the mounting frame 29 between the first main body 221 and the second main body 231.

In some embodiments, the connecting member 32 is adhesively bonded to the mounting frame 29, the accommodating member 24, and the second main body 231.

Optionally, the connecting member 32 is adhesively bonded to outer sides of the mounting frame 29, the accommodating member 24, and the second main body 231. The connecting member 32 may be adhesive paper, adhesive tape, or the like. Certainly, the connecting member 32 may also be an insulating film 244 provided with an adhesive layer, or the like; the adhesive layer may be glue or hot-melt adhesive, or the like, and the material of the connecting member 32 may be rubber, silicone, plastic, or the like.

The connecting member 32 is configured as a structure adhesively bonded to the mounting frame 29, the accommodating member 24, and the second main body 231 to connect the mounting frame 29, the accommodating member 24, and the second main body 231 into a whole, such that the battery cell 20 adopting such a structure is conducive to reducing the assembly difficulty of the connecting member 32 connecting the mounting frame 29, the accommodating member 24, and the second main body 231, thereby improving the assembly efficiency of the battery cell 20.

According to some embodiments of the present application, referring to FIG. 20, the connecting member 32 surrounds the outer sides of the mounting frame 29, the accommodating member 24, and the second main body 231 around the axis extending in the thickness direction X of the first wall. That is, the connecting member 32 is an annular structure extending in a circumferential direction of the mounting frame 29, such that the connecting member 32 wraps around the outer sides of the mounting frame 29, the accommodating member 24, and the second main body 231, and a side, facing the mounting frame 29, of the connecting member 32 is adhesively bonded to outer surfaces of the mounting frame 29, the accommodating member 24, and the second main body 231.

The connecting member 32 is configured as an annular structure surrounding the mounting frame 29, the accommodating member 24, and the second main body 231, such that the connecting member 32 wraps around the outer sides of the mounting frame 29, the accommodating member 24, and the second main body 231. This is conducive to further improving the structural stability of the connecting member 32 connecting the mounting frame 29, the accommodating member 24, and the second main body 231, thereby further improving the structural stability of the mounting frame 29 disposed between the first main body 221 and the second main body 231, so as to reduce the risks such as wobbling or detachment of the mounting frame 29 between the first main body 221 and the second main body 231.

In some embodiments, with further reference to FIG. 20, a first through hole 242 is provided on an outer peripheral surface of the accommodating member 24. The first through hole 242 is in communication with the accommodating cavity 241, and a projection of the first through hole 242 in an axial direction thereof does not overlap with the connecting member 32.

The first through hole 242 serves to allow the electrolytic solution in the accommodating cavity 241 of the accommodating member 24 to overflow; the projection of the first through hole 242 in the axial direction thereof does not overlap with the connecting member 32; that is, the first through hole 242 is not blocked by the connecting member 32 connected to the outer side of the accommodating member 24. That is, the first through hole 242 and the connecting member 32 are spaced apart from each other in the thickness direction X of the first wall.

The outer peripheral surface of the accommodating member 24 is provided with the first through hole 242, in communication with the inside of the accommodating member 24, of the accommodating cavity 241, such that excess electrolytic solution in the accommodating member 24 can overflow out of the accommodating cavity 241 through the first through hole 242 to wet the second electrode assembly 23 located outside the accommodating member 24. The projection of the first through hole 242 in the axial direction thereof is configured to not overlap with the connecting member 32, such that the connecting member 32 is a structure that does not cover the first through hole 242, thereby reducing the blocking of the electrolytic solution by the connecting member 32, so as to allow the electrolytic solution located in the accommodating cavity 241 to smoothly overflow out of the accommodating cavity 241 through the first through hole 242.

According to some embodiments of the present application, referring to FIGs. 5, 6, and 13, the first electrode assembly 22 includes two first tabs 222. The two first tabs 222 have opposite polarities and are both disposed at the end, facing the second main body 231, of the first main body 221. The second electrode assembly 23 includes two second tabs 232. The two second tabs 232 have opposite polarities and are both disposed at the end, facing the first main body 221, of the second main body 231. The first tab 222 and the second tab 232 having the same polarity are connected.

The two first tabs 222 have opposite polarities; that is, the two first tabs 222 output or input the positive electrode and the negative electrode of the first electrode assembly 22, respectively. Correspondingly, in the embodiments where the battery cell 20 is provided with the adapter member 30, two adapter members 30 are provided, and each adapter member 30 is connected to one first tab 222.

Illustratively, in FIG. 13, two first tabs 222 are spaced apart from each other in the second direction Z. It should be noted that in the embodiments where the battery cell 20 is provided with the mounting frame 29, and the clearance holes 292 are provided on the mounting frame 29, as shown in FIGs. 11 and 15, two clearance holes 292 are provided on the mounting hole, the two clearance holes 292 are spaced apart from each other in the second direction Z, the clearance holes 292 are arranged in a one-to-one correspondence with the adapter members 30, and each clearance hole 292 is configured to allow one adapter member 30 to be inserted thereinto.

The two second tabs 232 have opposite polarities; that is, the two second tabs 232 output or input the positive electrode and the negative electrode of the second electrode assembly 23, respectively. Correspondingly, each second tab 232 is connected to one first tab 222 by means of one adapter member 30.

Illustratively, in FIG. 13, two second tabs 232 are spaced apart from each other in the second direction Z. It should be noted that in the embodiments where the battery cell 20 is provided with the mounting frame 29, and the clearance holes 292 are provided on the mounting frame 29, as shown in FIGs. 11 and 15, two clearance holes 292 are provided on the mounting hole, the two clearance holes 292 are spaced apart from each other in the second direction Z, the clearance holes 292 are arranged in a one-to-one correspondence with the second tabs 232, and each clearance hole 292 is configured to allow one second tab 232 to be inserted thereinto.

The first tab 222 and the second tab 232 having the same polarity are connected; that is, the first tab 222 and the second tab 232, which both serve to output or input the positive electrode, are connected to each other, and the first tab 222 and the second tab 232, which both serve to output or input the negative electrode, are connected to each other, so as to achieve a parallel electrical connection between the first electrode assembly 22 and the second electrode assembly 23. It should be noted that in the embodiments where the battery cell 20 is provided with the adapter member 30, the first tab 222 and the second tab 232 of the polar case 10 are connected by means of one adapter member 30.

The two first tabs 222 of the first electrode assembly 22 having opposite polarities are both disposed at the end, facing the second main body 231, of the first main body 221, and the two second tabs 232 of the second electrode assembly 23 having opposite polarities are both disposed at the end, facing the first main body 221, of the second main body 231. The first tab 222 and the corresponding second tab 232 having the same polarity are connected to each other to achieve a parallel connection between the first electrode assembly 22 and the second electrode assembly 23, thereby achieving an electrical connection between the first electrode assembly 22 and the second electrode assembly 23. The structure is simple and easy to assemble.

In some embodiments, referring to FIGs. 3, 4, 5, and 13, in the thickness direction X of the first wall, the housing 21 is provided with a second wall 214 disposed opposite to the first wall 211. The battery cell 20 may further include two electrode terminals 25; the two electrode terminals 25 are both mounted to the second wall 214 in an insulated manner, and the electrode terminals 25 are configured to output or input electrical energy of the battery cell 20. The first electrode assembly 22 further includes two third tabs 223; the two third tabs 223 have opposite polarities and are both disposed at an end, facing the second wall 214, of the first main body 221 in the thickness direction X of the first wall, and the two third tabs 223 are connected to the two electrode terminals 25, respectively.

The two third tabs 223 have opposite polarities; that is, the two third tabs 223 output or input the positive electrode and the negative electrode of the first electrode assembly 22, respectively, such that the two third tabs 223 can output or input the electrical energy of the battery cell 20 after being connected to the two electrode terminals 25, respectively.

Optionally, the connecting structure between the third tab 223 and the electrode terminal 25 may be of various types. The third tab 223 and the electrode terminal 25 may be directly connected; for example, the third tab 223 and the electrode terminal 25 are connected by welding or abutting against each other. Certainly, the third tab 223 and the electrode terminal 25 may also be indirectly connected; for example, the third tab 223 and a current collecting member are welded to or abut against each other, and the resulting structure is then welded to or abut against the electrode terminal 25.

It should be noted that the second wall 214 configured to mount the electrode terminals 25 may be an end cover 213 of the housing 21 or a wall of the housing body 212. Illustratively, in FIGs. 3 and 4, the second wall 214 is the end cover 213 of the housing 21. Certainly, in some embodiments, the second wall 214 may also be a bottom wall of the housing body 212 of the housing 21 disposed opposite to the end cover 213, or a side wall of the housing body 212 of the housing 21 connected to and adjacent to the end cover 213.

The two third tabs 223 are provided on the end, facing the second wall 214, of the first main body 221 of the first electrode assembly 22, and the two third tabs 223 are correspondingly connected to the two electrode terminals 25 disposed on the second wall 214 to realize the input or output of the electrical energy of the battery cell 20, such that the battery cell 20 adopting such a structure only needs to connect the third tabs 223 to the electrode terminals 25 to realize the input or output of the electrical energy of the battery cell 20 after the first electrode assembly 22 and the second electrode assembly 23 are electrically connected to each other, without the need to provide a plurality of electrode output ends, thereby realizing the increase in the length dimension of the battery cell 20 in the thickness direction X of the first wall while only requiring two electrode terminals 25 to realize the input or output of the electrical energy of the battery cell 20. Therefore, this can effectively reduce the assembly difficulty of the battery cell 20, help to reduce the manufacturing cost of the battery cell 20, and help to improve the production efficiency of the battery cell 20.

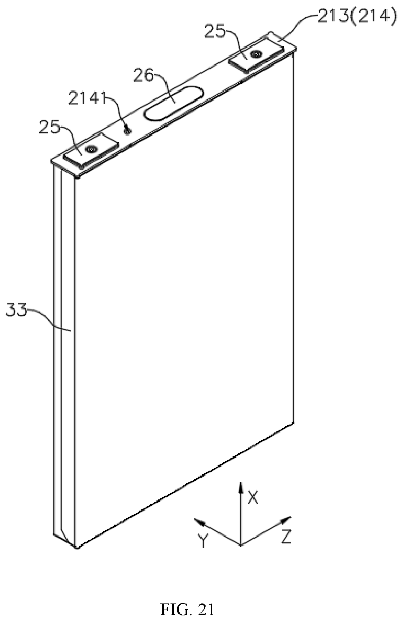

According to some embodiments of the present application, referring to FIG. 4, and further referring to FIG. 21, FIG. 21 is a schematic diagram of an assembly of a first electrode assembly 22 and a second electrode assembly 23 with a third insulating member 33 according to some embodiments of the present application. The battery cell 20 may further include a third insulating member 33. The third insulating member 33 wraps around outer sides of the accommodating member 24 and the second electrode assembly 23 around the axis extending in the thickness direction X of the first wall, and the insulating member is configured to insulate and isolate the second electrode assembly 23 from the housing 21.

The third insulating member 33 wraps around the outer sides of the accommodating member 24 and the second electrode assembly 23 around the axis extending in the thickness direction X of the first wall; that is, the third insulating member 33 is disposed surrounding the outer sides of the accommodating member 24 and the second electrode assembly 23 in a circumferential direction of the first electrode assembly 22 and the second electrode assembly 23, such that the accommodating member 24 and the second electrode assembly 23 are both located on an inner side of the third insulating member 33. This causes the third insulating member 33 to be located between the housing 21 and the accommodating member 24 as well as between the housing 21 and the second electrode assembly 23.

Illustratively, the third insulating member 33 may be made of various materials. For example, the third insulating member 33 may be made of rubber, silicone, or plastic.

In some embodiments, an adhesive layer may be provided on a side, facing the accommodating member 24 or the second electrode assembly 23, of the third insulating member 33, such that the third insulating member 33 can be adhesively bonded to an outer surface of the accommodating member 24 or the second electrode assembly 23. The adhesive layer may be glue, double-sided adhesive tape, or the like.

The battery cell 20 is further provided with the third insulating member 33, and the third insulating member 33 wraps around the outer sides of the accommodating member 24 and the second electrode assembly 23. In one aspect, enabling the third insulating member 33 to separate the first electrode assembly 22 from the housing 21 as well as the second electrode assembly 23 from the housing 21 is conducive to reducing the risk of short circuit between the first electrode assembly 22 and the housing 21 as well as between the second electrode assembly 23 and the housing 21, thereby improving the use reliability of the battery cell 20. In another aspect, the third insulating member 33 can further provide a fastening effect for the second electrode assembly 23 and the accommodating member 24 wrapping around the outer side of the first electrode assembly 22, such that the first electrode assembly 22 and the second electrode assembly 23 arranged in the thickness direction X of the first wall can be connected into a whole, thereby helping to improve the overall structural stability of the first electrode assembly 22 and the second electrode assembly 23.

According to some embodiments of the present application, referring to FIGs. 3 and 4, the housing 21 may include a housing body 212 and an end cover 213. The housing body 212 includes a side wall and a first wall 211 that are integrally formed. The side wall is disposed around the first wall 211, and in the thickness direction X of the first wall, one end of the side wall is connected to the first wall 211, and the other end of the side wall defines, in an enclosing manner, a second opening 2121. The side wall and the first wall 211 jointly define an accommodating space configured to accommodate the first electrode assembly 22 and the second electrode assembly 23. The end cover 213 closes the second opening 2121. That is, the first wall 211 is a bottom wall of the housing body 212 disposed opposite to the end cover 213 in the thickness direction X of the first wall, and correspondingly, the second wall 214 is the end cover 213; that is, the electrode terminal 25 is mounted on the end cover 213, and the third tab 223 of the first electrode assembly 22 is disposed at an end, facing the end cover 213, of the first main body 221 in the thickness direction X of the first wall.

The housing body 212 includes the side wall and the first wall 211 that are integrally formed; that is, the housing body 212 is manufactured by adopting an integral forming process, for example, an integral forming process such as stamping, casting, or extrusion molding; that is, the side wall and the first wall 211 of the housing body 212 are of an integrated structure.

The first wall 211 of the housing 21 is configured as a wall of the housing body 212 disposed opposite to the end cover 213 in the first direction Y, such that the first electrode assembly 22 and the second electrode assembly 23 accommodated in the housing 21 are structures supported by the bottom wall of the housing body 212. Adopting such a structure can enable the opening of the housing body 212 to be located on an upper side of the housing 21, thereby helping to reduce the risk of liquid leakage of the battery cell 20 during use caused by a connection failure between the end cover 213 and the housing body 212.

It should be noted that the structure of the battery cell 20 is not limited thereto; in some embodiments, the battery cell 20 may also be of other structures. For example, the housing 21 may include a housing body 212 and an end cover 213, an accommodating space provided with a second opening 2121 is formed inside the housing body 212, and the accommodating space is configured to accommodate the first electrode assembly 22 and the second electrode assembly 23. The end cover 213 closes the second opening 2121, and the end cover 213 is the first wall 211. That is, the battery cell 20 is a structure in which the end cover 213 is oriented downward, and correspondingly, the second wall 214 is the bottom wall of the housing body 212 disposed opposite to the end cover 213 in the thickness direction X of the first wall; that is, the electrode terminal 25 is mounted on the bottom wall of the housing body 212, and the third tab 223 of the first electrode assembly 22 is disposed at an end, facing the bottom wall of the housing body 212, of the first main body 221, in the thickness direction X of the first wall.

The first wall 211 of the housing 21 is configured as the end cover 213 of the housing 21 for closing the opening of the housing body 212, such that the battery cell 20 adopting such a structure facilitates the assembly of the first electrode assembly 22 and the second electrode assembly 23 into the housing body 212, and facilitates the support of the second electrode assembly 23 by the end cover 213, thereby helping to reduce the assembly difficulty of the battery cell 20, and thus improving the production efficiency of the battery cell 20.

According to some embodiments of the present application, the present application further provides a battery 100. The battery 100 includes the battery cell 20 according to any one of the above solutions.

Referring to FIG. 2, the battery 100 may further include a case 10, and the battery cells 20 are accommodated in the case 10.

In some embodiments, the case 10 may include a first case body 11 and a second case body 12. The first case body 11 and the second case body 12 cover each other. The first case body 11 and the second case body 12 jointly define an assembly space for accommodating the battery cell 20.

Optionally, the second case body 12 may be of a hollow structure with one end open, and the first case body 11 may be of a plate-shaped structure. The first case body 11 covers the open side of the second case body 12, such that the first case body 11 and the second case body 12 jointly define an assembly space; the first case body 11 and the second case body 12 may also both be of a hollow structure with one side open, and the open side of the first case body 11 covers the open side of the second case body 12.

Certainly, the case 10 formed by the first case body 11 and the second case body 12 may be in various shapes, such as a cylinder or a rectangular parallelepiped. Illustratively, in FIG. 2, the case 10 is of a rectangular parallelepiped structure.

Optionally, one or a plurality of battery cells 20 disposed in the case 10 may be provided. Illustratively, in FIG. 2, a plurality of battery cells 20 are provided in the case 10 of the battery 100, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may also be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10.

The battery 100 may further include other structures. For example, the battery 100 may further include a busbar component, and the busbar component connects the plurality of battery cells 20 to achieve an electrical connection among the plurality of battery cells 20.

It should be noted that in some embodiments, the battery 100 may not be provided with the case 10; the battery 100 includes a plurality of battery cells 20, and the battery 100 composed of the plurality of battery cells 20 may be directly assembled to an electric device to provide electrical energy for the electric device via the plurality of battery cells 20. That is, the case 10 may serve as a portion of the electric device. Taking a vehicle 1000 as an example of the electric device, the case 10 may serve as a portion of the chassis structure of the vehicle 1000. For example, a portion of the case 10 may become at least a portion of the floor of the vehicle 1000, or a portion of the case 10 may become at least a portion of the crossbeam and the longitudinal beam of the vehicle 1000.

According to some embodiments of the present application, the present application further provides an electric device. The electric device includes the battery cell 20 according to any one of the above solutions, and the battery cell 20 is configured to provide electrical energy for the electric device.

The electric device may be any one of the aforementioned devices or systems that use the battery cell 20.

According to some embodiments of the present application, referring to FIGs. 3 to 21, the present application provides a battery cell 20. The battery cell 20 includes a housing 21, two electrode terminals 25, a first electrode assembly 22, a second electrode assembly 23, an accommodating member 24, a first insulating member 27, a second insulating member 28, two adapter members 30, a sealing member 31, a mounting frame 29, a connecting member 32, and a third insulating member 33. The housing 21 is provided with a first wall 211 and a second wall 214 disposed opposite to each other, and the second wall 214 is provided with a liquid injection hole 2141. The housing 21 includes a housing body 212 and an end cover 213. The housing body 212 includes a side wall and the first wall 211 that are integrally formed. The side wall is disposed around the first wall 211, and in the thickness direction X of the first wall, one end of the side wall is connected to the first wall 211, and the other end of the side wall defines, in an enclosing manner, a second opening 2121. The side wall and the first wall 211 jointly define an accommodating space. The end cover 213 closes the second opening 2121, and the end cover 213 is the second wall 214. A length direction of the housing 21 is consistent with the thickness direction X of the first wall, and the length of the housing 21 is L, satisfying L ≥ 250 mm. The two electrode terminals 25 are both mounted to the second wall 214 in an insulated manner, and the electrode terminals 25 are configured to output or input electrical energy of the battery cell 20. The first electrode assembly 22 and the second electrode assembly 23 are both wound structures formed by winding around an axis extending in the thickness direction X of the first wall. The first electrode assembly 22 and the second electrode assembly 23 are both accommodated in the housing 21 and arranged in the thickness direction X of the first wall, and the first electrode assembly 22 is electrically connected to the second electrode assembly 23. The second electrode assembly 23 is located between the first wall 211 and the first electrode assembly 22, and the first wall 211 is configured to support the second electrode assembly 23. The first electrode assembly 22 includes a first main body 221, two first tabs 222, and two third tabs 223. The second electrode assembly 23 includes a second main body 231 and two second tabs 232. The second main body 231 and the first main body 221 are arranged in the thickness direction X of the first wall. In the thickness direction X of the first wall, the two first tabs 222 are both disposed at an end, facing the second main body 231, of the first main body 221 and have opposite polarities, the two third tabs 223 are both disposed at an end, facing away from the second main body 231, of the first main body 221 and have opposite polarities, and the two third tabs 223 are connected to the two electrode terminals 25, respectively; the two second tabs 232 are both disposed at an end, facing the first main body 221, of the second main body 231 and have opposite polarities, and the first tab 222 and the second tab 232 having the same polarity are connected to electrically connect the first electrode assembly 22 and the second electrode assembly 23. The accommodating member 24 is made of an insulating material; the accommodating member 24 is disposed in the housing 21, an accommodating cavity 241 is formed inside the accommodating member 24, and the accommodating cavity 241 accommodates the first electrode assembly 22 and an electrolytic solution. A plurality of first through holes 242 are provided on an outer peripheral surface of the accommodating member 24, and the plurality of first through holes 242 are spaced apart from each other in a circumferential direction of the first electrode assembly 22. The first through holes 242 are in communication with the accommodating cavity 241, and in the thickness direction X of the first wall, the first through holes 242 are located between end surfaces at the two ends of the first electrode assembly 22. A first opening 243 is formed at an end, close to the second wall 214, of the accommodating cavity 241 in the thickness direction X of the first wall, and the first opening 243 is in communication with the liquid injection hole 2141. The accommodating member 24 includes two films 244, the two films 244 are arranged in the first direction Y, and the two films 244 jointly define, in an enclosing manner, the accommodating cavity 241. An end, close to the first wall 211, of each film 244 in the thickness direction X of the first wall forms a first connection region 2441, and the first connection regions 2441 of the two films 244 are stacked and in hot-melting connection. Two ends of each film 244 in the second direction Z form two second connection regions 2442, respectively, and the second connection regions 2442 of the two films 244 are correspondingly stacked and in hot-melting connection. Every two of the thickness direction X, the first direction Y, and the second direction Z of the first wall are perpendicular to each other. The first insulating member 27 is disposed between the first electrode assembly 22 and the accommodating member 24 and adhesively bonded to the first electrode assembly 22, the first insulating member 27 is disposed surrounding the first electrode assembly 22 around an axis extending in the thickness direction X of the first wall, and a projection of the first through hole 242 in an axial direction thereof is located within the first insulating member 27. The second insulating member 28 is disposed on a side, facing the first electrode assembly 22, of the second wall 214, the second insulating member 28 is configured to insulate and isolate the second wall 214 from the first electrode assembly 22, and an end, facing the second wall 214, of the accommodating member 24 in the thickness direction X of the first wall is in hot-melting connection to the second insulating member 28. The second insulating member 28 closes the first opening 243. Each adapter member 30 is connected to one first tab 222 and one second tab 232, the first tab 222 is located within the accommodating cavity 241, the second tab 232 is located outside the accommodating member 24, and a channel for the adapter member 30 to pass through is provided at an end, close to the second main body 231, of the accommodating member 24 in the thickness direction X of the first wall. The channel is formed between the first connection regions 2441 of the two films 244. The sealing member 31 is disposed between the adapter member 30 and the accommodating member 24, and the sealing member 31 is configured to seal a gap between the adapter member 30 and the accommodating member 24. The mounting frame 29 is accommodated in the housing 21 and located on an outer side of the accommodating member 24. In the thickness direction X of the first wall, the mounting frame 29 is disposed between the first main body 221 and the second main body 231, and the mounting frame 29 is configured to separate the first main body 221 from the second main body 231. A clearance groove 291 is provided on a side, facing the first main body 221, of the mounting frame 29 in the thickness direction X of the first wall, and the clearance groove 291 is configured to accommodate the first connection regions 2441 of the two films 244. The mounting frame 29 is provided with a clearance hole 292, the clearance hole 292 extends through the mounting frame 29 in the thickness direction X of the first wall, and the adapter member 30 and the second tab 232 are both inserted into the clearance hole 292. The mounting frame 29 includes a first frame body 293 and a second frame body 294 detachably connected to each other. The first frame body 293 and the second frame body 294 are arranged in a first direction Y, and the first frame body 293 and the second frame body 294 jointly define, in an enclosing manner, the clearance hole 292. The first direction Y is perpendicular to the thickness direction X of the first wall. A first groove 2931 is provided on a side, facing the second frame body 294, of the first frame body 293, and the first groove 2931 extends through the first frame body 293 in the thickness direction X of the first wall. A second groove 2941 is provided on a side, facing the first frame body 293, of the second frame body 294, and the second groove 2941 extends through the second frame body 294 in the thickness direction X of the first wall. The second groove 2941 and the first groove 2931 define, in an enclosing manner, the clearance hole 292. A snap-fit part 2932 is provided on a side, facing the second frame body 294, of the first frame body 293, and a snap-fit hole 2942 is provided on a side, facing the first frame body 293, of the second frame body 294; the snap-fit hole 2942 is configured to allow the snap-fit part 2932 to be snap-fitted thereinto. The mounting frame 29 is provided with a plurality of second through holes 297, each second through hole 297 extends through the mounting frame 29 in the thickness direction X of the first wall, and the second through hole 297 is configured to allow an electrolytic solution to pass through. A cavity 298 is formed inside the mounting frame 29, and the cavity 298 is in communication with the second through hole 297. The connecting member 32 surrounds outer sides of the mounting frame 29, the accommodating member 24, and the second main body 231 around the axis extending in the thickness direction X of the first wall, the connecting member 32 is adhesively bonded to the mounting frame 29, the accommodating member 24, and the second main body 231, and a projection of the first through hole 242 in an axial direction thereof does not overlap with the connecting member 32. The third insulating member 33 wraps around outer sides of the accommodating member 24 and the second electrode assembly 23 around the axis extending in the thickness direction X of the first wall, and the insulating member is configured to insulate and isolate the second electrode assembly 23 from the housing 21. The first tab 222 includes a first root part 2221 and a first tab part 2222. The first root part 2221 connects the first tab part 2222 and the first main body 221, and the first tab part 2222 is connected to the adapter member 30. In the thickness direction X of the first wall, a first accommodating groove 295 is provided on a side, facing the first main body 221, of the mounting frame 29. The first accommodating groove 295 is configured to accommodate the first root part 2221, and the clearance hole 292 extends through a groove bottom surface of the first accommodating groove 295. The first root part 2221 is provided with a first surface 2221a facing away from the first main body 221, the first tab part 2222 protrudes from the first surface 2221a, and the first surface 2221a fits with the groove bottom surface of the first accommodating groove 295. The second tab 232 includes a second root part 2321 and a second tab part 2322. The second root part 2321 connects the second tab part 2322 and the second main body 231. The second tab part 2322 is inserted into the clearance hole 292, and the second tab part 2322 is connected to the adapter member 30. In the thickness direction X of the first wall, a second accommodating groove 296 is provided on a side, facing the second main body 231, of the mounting frame 29. The second accommodating groove 296 is configured to accommodate the second root part 2321, and the clearance hole 292 extends through a groove bottom surface of the second accommodating groove 296. The second root part 2321 is provided with a second surface 2321a facing away from the second main body 231. The second tab part 2322 protrudes from the second surface 2321a, and the second surface 2321a fits with the groove bottom surface of the second accommodating groove 296.

It should be noted that in the absence of conflicts, the embodiments and features in the embodiments in the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a housing, provided with a first wall;
a first electrode assembly and a second electrode assembly, both accommodated in the housing and arranged in a thickness direction of the first wall, the second electrode assembly being located between the first wall and the first electrode assembly, and the first wall being configured to support the second electrode assembly;
an accommodating member, disposed in the housing, wherein an accommodating cavity is formed inside the accommodating member, and the accommodating cavity accommodates the first electrode assembly and an electrolytic solution.

2. The battery cell according to claim 1, wherein a first through hole is provided on an outer peripheral surface of the accommodating member, the first through hole is in communication with the accommodating cavity, and in the thickness direction of the first wall, the first through hole is located between end surfaces at two ends of the first electrode assembly.

3. The battery cell according to claim 2, wherein a plurality of first through holes are provided on the accommodating member, and the plurality of first through holes are spaced apart from each other in a circumferential direction of the first electrode assembly.

4. The battery cell according to claim 2 or 3, wherein the battery cell further comprises:
a first insulating member, disposed between the first electrode assembly and the accommodating member, wherein a projection of the first through hole in an axial direction thereof is located within the first insulating member.

5. The battery cell according to claim 4, wherein the first insulating member is disposed surrounding the first electrode assembly around an axis extending in the thickness direction of the first wall.

6. The battery cell according to claim 4 or 5, wherein the first insulating member is adhesively bonded to the first electrode assembly.

7. The battery cell according to any one of claims 1 to 6, wherein in the thickness direction of the first wall, the housing is provided with a second wall disposed opposite to the first wall, a liquid injection hole is provided on the second wall, and the liquid injection hole is in communication with the accommodating cavity.

8. The battery cell according to any one of claims 1 to 7, wherein in the thickness direction of the first wall, the housing is provided with a second wall disposed opposite to the first wall;
the battery cell further comprises a second insulating member, the second insulating member is disposed on a side, facing the first electrode assembly, of the second wall, and the second insulating member is configured to insulate and isolate the second wall from the first electrode assembly;
wherein an end, facing the second wall, of the accommodating member in the thickness direction of the first wall is connected to the second insulating member.

9. The battery cell according to claim 8, wherein the accommodating member is in hot-melting connection to the second insulating member.

10. The battery cell according to claim 8 or 9, wherein a first opening is formed on the accommodating cavity at an end, close to the second wall, in the thickness direction of the first wall, and the second insulating member closes the first opening.

11. The battery cell according to any one of claims 1 to 10, wherein the accommodating member comprises:
two films, arranged in a first direction, the two films jointly defining, in an enclosing manner, the accommodating cavity;
wherein an end, close to the first wall, of each of the films in the thickness direction of the first wall forms a first connection region, and the first connection regions of the two films are stacked and connected to each other; two ends of each film in a second direction form two second connection regions, respectively, and the second connection regions of the two films are correspondingly stacked and connected to each other, every two of the thickness direction of the first wall, the first direction, and the second direction being perpendicular to each other.

12. The battery cell according to claim 11, wherein the first connection regions of the two films are in hot-melting connection; and/or
the second connection regions of the two films are in hot-melting connection.

13. The battery cell according to claim 11 or 12, wherein the first electrode assembly comprises a first main body and a first tab connected to each other, the second electrode assembly comprises a second main body and a second tab connected to each other, the second main body and the first main body are arranged in the thickness direction of the first wall, and the first tab is electrically connected to the second tab;
the battery cell further comprises a mounting frame; the mounting frame is accommodated in the housing and located on an outer side of the accommodating member; in the thickness direction of the first wall, the mounting frame is disposed between the first main body and the second main body, and the mounting frame is configured to separate the first main body from the second main body;
wherein a clearance groove is provided on a side, facing the first main body, of the mounting frame in the thickness direction of the first wall, and the clearance groove is configured to accommodate the first connection regions of the two films.

14. The battery cell according to any one of claims 1 to 13, wherein the accommodating member is made of an insulating material.

15. The battery cell according to any one of claims 1 to 14, wherein the first electrode assembly and the second electrode assembly are both wound structures formed by winding around the axis extending in the thickness direction of the first wall.

16. The battery cell according to claim 15, wherein a length direction of the housing is consistent with a thickness direction of the first wall, and a length of the housing is L, satisfying L ≥ 200 mm.

17. The battery cell according to claim 16, wherein L ≥ 250 mm.

18. The battery cell according to any one of claims 1 to 17, wherein the first electrode assembly is electrically connected to the second electrode assembly.

19. The battery cell according to claim 18, wherein the first electrode assembly comprises a first main body and a first tab, the second electrode assembly comprises a second main body and a second tab, and the second main body and the first main body are arranged in the thickness direction of the first wall;
wherein in the thickness direction of the first wall, the first tab is disposed at an end, facing the second main body, of the first main body, the second tab is disposed at an end, facing the first main body, of the second main body, and the second tab is connected to the first tab to electrically connect the first electrode assembly and the second electrode assembly.

20. The battery cell according to claim 19, wherein the battery cell further comprises:
an adapter member, connecting the first tab and the second tab, wherein the first tab is located within the accommodating cavity, the second tab is located outside the accommodating member, and a channel for the adapter member to pass through is provided at an end, close to the second main body, of the accommodating member in the thickness direction of the first wall.

21. The battery cell according to claim 20, wherein the battery cell further comprises:
a sealing member, disposed between the adapter member and the accommodating member, the sealing member being configured to seal a gap between the adapter member and the accommodating member.

22. The battery cell according to claim 20 or 21, wherein the accommodating member comprises:
two films, arranged in a first direction, the two films jointly defining, in an enclosing manner, the accommodating cavity;
wherein an end, close to the first wall, of each of the films in the thickness direction of the first wall forms a first connection region, the first connection regions of the two films are stacked and connected to each other, and the channel is formed between the first connection regions of the two films.

23. The battery cell according to any one of claims 20 to 22, wherein the battery cell further comprises:
a mounting frame, accommodated in the housing and located on an outer side of the accommodating member, wherein in the thickness direction of the first wall, the mounting frame is disposed between the first main body and the second main body, and the mounting frame is configured to separate the first main body from the second main body;
wherein the mounting frame is provided with a clearance hole, the clearance hole extends through the mounting frame in the thickness direction of the first wall, and the adapter member and the second tab are both inserted into the clearance hole.

24. The battery cell according to claim 23, wherein the mounting frame comprises a first frame body and a second frame body detachably connected to each other; the first frame body and the second frame body are arranged in a first direction, and the first frame body and the second frame body jointly define, in an enclosing manner, the clearance hole, the first direction being perpendicular to the thickness direction of the first wall.

25. The battery cell according to claim 24, wherein a first groove is provided on a side, facing the second frame body, of the first frame body, and the first groove extends through the first frame body in the thickness direction of the first wall; a second groove is provided on a side, facing the first frame body, of the second frame body, and the second groove extends through the second frame body in the thickness direction of the first wall; the second groove and the first groove define, in an enclosing manner, the clearance hole.

26. The battery cell according to claim 24 or 25, wherein a snap-fit part is provided on a side, facing the second frame body, of the first frame body, and a snap-fit hole is provided on a side, facing the first frame body, of the second frame body; the snap-fit hole is configured to allow the snap-fit part to be snap-fitted thereinto.

27. The battery cell according to any one of claims 23 to 26, wherein the first tab comprises a first root part and a first tab part; the first root part connects the first tab part and the first main body, and the first tab part is connected to the adapter member;
wherein in the thickness direction of the first wall, a first accommodating groove is provided on a side, facing the first main body, of the mounting frame, the first accommodating groove is configured to accommodate the first root part, and the clearance hole extends through a groove bottom surface of the first accommodating groove.

28. The battery cell according to claim 27, wherein in the thickness direction of the first wall, the first root part is provided with a first surface facing away from the first main body, the first tab part protrudes from the first surface, and the first surface fits with the groove bottom surface of the first accommodating groove.

29. The battery cell according to any one of claims 23 to 28, wherein the second tab comprises a second root part and a second tab part; the second root part connects the second tab part and the second main body, the second tab part is inserted into the clearance hole, and the second tab part is connected to the adapter member;
wherein in the thickness direction of the first wall, a second accommodating groove is provided on a side, facing the second main body, of the mounting frame, the second accommodating groove is configured to accommodate the second root part, and the clearance hole extends through a groove bottom surface of the second accommodating groove.

30. The battery cell according to claim 29, wherein in the thickness direction of the first wall, the second root part is provided with a second surface facing away from the second main body, the second tab part protrudes from the second surface, and the second surface fits with the groove bottom surface of the second accommodating groove.

31. The battery cell according to any one of claims 23 to 29, wherein the mounting frame is provided with a second through hole, the second through hole extends through the mounting frame in the thickness direction of the first wall, and the second through hole is configured to allow an electrolytic solution to pass through.

32. The battery cell according to claim 31, wherein a plurality of second through holes are provided on the mounting frame.

33. The battery cell according to claim 31 or 32, wherein a cavity is formed inside the mounting frame, and the cavity is in communication with the second through hole.

34. The battery cell according to any one of claims 23 to 33, wherein the battery cell further comprises:
a connecting member, connecting the mounting frame, the accommodating member, and the second main body.

35. The battery cell according to claim 34, wherein the connecting member is adhesively bonded to the mounting frame, the accommodating member, and the second main body.

36. The battery cell according to claim 34 or 35, wherein the connecting member surrounds outer sides of the mounting frame, the accommodating member, and the second main body around the axis extending in the thickness direction of the first wall.

37. The battery cell according to claim 36, wherein a first through hole is provided on an outer peripheral surface of the accommodating member, and the first through hole is in communication with the accommodating cavity;
wherein a projection of the first through hole in an axial direction thereof does not overlap with the connecting member.

38. The battery cell according to any one of claims 19 to 37, wherein the first electrode assembly comprises two first tabs, and the two first tabs have opposite polarities and are both disposed at the end, facing the second main body, of the first main body;
the second electrode assembly comprises two second tabs, and the two second tabs have opposite polarities and are both disposed at the end, facing the first main body, of the second main body;
wherein the first tab and the second tab having a same polarity are connected.

39. The battery cell according to claim 38, wherein in the thickness direction of the first wall, the housing is provided with a second wall disposed opposite to the first wall;
the battery cell further comprises two electrode terminals; the two electrode terminals are both mounted to the second wall in an insulated manner, and the electrode terminals are configured to output or input electrical energy of the battery cell;
wherein the first electrode assembly further comprises two third tabs, the two third tabs have opposite polarities and are both disposed at an end, facing the second wall, of the first main body in the thickness direction of the first wall, and the two third tabs are connected to the two electrode terminals, respectively.

40. The battery cell according to any one of claims 1 to 39, wherein the battery cell further comprises:
a third insulating member, wrapping around outer sides of the accommodating member and the second electrode assembly around the axis extending in the thickness direction of the first wall, the insulating member being configured to insulate and isolate the second electrode assembly from the housing.

41. The battery cell according to any one of claims 1 to 40, wherein the housing comprises:
a housing body, comprising a side wall and the first wall that are integrally formed, wherein the side wall is disposed around the first wall; in the thickness direction of the first wall, one end of the side wall is connected to the first wall, and the other end of the side wall defines, in an enclosing manner, a second opening; the side wall and the first wall jointly define an accommodating space configured to accommodate the first electrode assembly and the second electrode assembly; and
an end cover, closing the second opening.

42. The battery cell according to any one of claims 1 to 40, wherein the housing comprises:
a housing body, wherein an accommodating space provided with a second opening is formed thereinside, and the accommodating space is configured to accommodate the first electrode assembly and the second electrode assembly;
an end cover, closing the second opening;
wherein the end cover is the first wall.

43. A battery, comprising the battery cell according to any one of claims 1 to 42.

44. An electric device, comprising the battery cell according to any one of claims 1 to 42, wherein the battery cell is configured to provide electrical energy.
